# EUROPÄISCHE PATENTSCHRIFT

(11) **EP 2 655 458 B1**
(45) Veröffentlichungstag und Bekanntmachung des Hinweises auf die Patenterteilung: **22.02.2017**
(21) Anmeldenummer: 11794507.1
(22) Anmeldetag: 15.12.2011
(51) Int. Cl.: C08G 18/08, C08G 18/66, C09D 175/04, C08F 283/00

(54) **VERFAHREN ZUR HERSTELLUNG VON POLYURETHAN-POLYACRYLAT-HYBRID DISPERSIONEN**
METHOD FOR PRODUCING POLYURETHANE POLYACRYLATE HYBRID DISPERSIONS
PROCÉDÉ DE PRÉPARATION DE DISPERSIONS D'HYBRIDES DE POLYURÉTHANE-POLYACRYLATE

(30) Priorität: 20.12.2010 US 201061424705 P; 20.12.2010 EP 10195967
(43) Veröffentlichungstag der Anmeldung: 30.10.2013
(73) Patentinhaber: BASF SE, 67056 Ludwigshafen am Rhein (DE)
(72) Erfinder: HARTIG, Jens, 67063 Ludwigshafen (DE); DARGATZ, Manfred, 67549 Worms (DE); HECHAVARRIA FONSECA, Maria Teresa, 68305 Mannheim (DE); LOHMEIJER, Bas, 68199 Mannheim (DE)
(74) Vertreter: BASF IP Association
(86) Internationale Anmeldenummer: PCT/EP2011/072848
(87) Internationale Veröffentlichungsnummer: WO 2012/084668

(56) Entgegenhaltungen:
- EP-A1- 1 391 471
- WO-A1-99/16805
- WO-A1-2006/097318
- US-A- 5 945 473

## Beschreibung

Die vorliegende Erfindung betrifft ein neues Verfahren zur Herstellung von Polyurethan- Polyacrylat -Hybrid Dispersionen, die so erhaltenen Dispersionen und deren Verwendung.

Aus US 3,705,164 ist die Herstellung von Polyurethan- Polyacrylat-Hybrid Dispersionen in allgemeiner Form bekannt. Dazu werden radikalisch polymerisierbare olefinisch ungesättigte Monomere in Gegenwart einer Polyurethandispersion mit Hilfe von Polymerisationskatalysatoren, wie beispielsweise Peroxiden oder Azoverbindungen, radikalisch polymerisiert. Die Polymerisationskatalysatoren werden bevorzugt in Gegenwart von reduzierend wirkenden Verbindungen eingesetzt. In der Beschreibung und in den explizit durchgeführten Beispielen werden die Reaktionen mit Hilfe eines Gemisches des Polymerisationskatalysators und der reduzierend wirkenden Verbindung bei der jeweiligen Reaktionstemperatur gestartet.

Aus EP 1228113 B2 ist die Herstellung von Polyurethan-Polymer-Hybrid Dispersionen bekannt, wobei zunächst Polyurethandispersion, Monomere und Initiatorkomponente bei einer Temperatur von 15 bis 35 °C vermischt werden und dieses Gemisch in einem anschließenden Reaktionsschritt bei einer Temperatur von 80 +/- 10 °C zur Reaktion gebracht wird.

Als Vorteil wird angegeben, daß die Polyurethandispersion bereits stabilisierend wirkt und darüberhinaus kein weiterer Emulgator zugegeben werden muß.

Als Initiatorkomponenten werden verschiedene Peroxide und Azoverbindungen offenbart. Die Gegenwart von reduzierend wirkenden Verbindungen wird nicht offenbart.

Nachteilig bei der Polymerisierung von olefinisch ungesättigten Monomeren in Gegenwart oder Abwesenheit von Polyurethanen ist die Bildung von Koagulat während der Reaktion. Dies zeigt sich bei dem Verfahren gemäß der EP 1228113 B2 beispielsweise an dem Erfordernis einer Filtration über ein 100 µm-Sieb nach Beendigung der Reaktion, siehe dort Absatz [0073].

EP 1173491 B1 beschreibt die Polymerisierung eines Gemischs von mono- und difunktionellen ethylenisch gesättigten Verbindungen in Gegenwart eines Polyesterpolyols, Polyurethans oder Polyacrylates mit einem Redoxinitiatorsystem und deren Verwendung als Lacke.

EP 1185568 B1 beschreibt das gleiche Reaktionsprinzip, wobei die Polymerisierung zweistufig ausgeführt werden kann. Dokument EP 1 391 471 A1 offenbart die Herstellung einer wässrigen Polyurethan-Polyacrylat Hybrid-Dispersion. Das Polyurethan basiert auf IPDI, einen aliphatischen Polyester, Dimethylolpropansäure und Butandiol (Beispiel 1). Das Polyurethan enthält 405 mmol Säuregruppen per Kg Polyurethan. Die radikalisch polymerisierte Acrylamonomergemische werden in zwei Stufen polymerisiert bei höchstens 70°C in Anwesenheit einer Eisenverbindung und einen Redoxinitiatrosystems. In der ersten Stufe wird eine Mischung aus Butylacrylat, Methylmethacrylat und Styrol polymerisiert und in der zweiten Stufe wird wieder eine Mischung aus Butylacrylat, Methylmethacrylat und Styrol polymerisiert. Das Gewichtsverhältnis von Polyurethan zu der Summe der ethylenisch ungesättigten Verbindungen beträgt 30:50.

Nachteilig an den beiden letztgenannten Schriften ist, daß für die dort beschriebenen Lacksysteme jeweils ein hochmolekularer Vernetzer, beispielsweise ein Melamin-Formaldehyd-Harz, erforderlich zur Ausbildung einer Beschichtung ist und von Formulierer zudosiert werden muß, was die Gefahr von Fehldosierungen und somit der Nichteinhaltung von reaktiven Verhältnissen mit sich bringt.

Der vorliegenden Erfindung lag die Aufgabe zugrunde, neue Polyurethan- Polyacrylat - Hybrid Dispersionen zu entwickeln, die ohne das Erfordernis der Zudosierung eines Vernetzers beim Formulierer Beschichtungen mit guten Eigenschaften ergeben, insbesondere hohe Elastizitäten, Blockfestigkeit und Wasserbeständigkeit, die eine vergleichbare Reißfestigkeit wie herkömmliche Polyacrylatdispersionen aufweisen. Ferner sollen die Dispersionen eine geringe Vergilbung zeigen und somit für Außenanwendungen einsetzbar sein.

Die Aufgabe wurde gelöst durch Polyurethan-Polyacrylat-Hybrid Dispersionen, erhältlich durch zweistufige radikalische Polymerisierung ethylenisch ungesättigter Verbindungen in Gegenwart mindestens eines Polyurethans (P1), wobei man in einer ersten Stufe ein Monomerengemisch (e) mindestens einer ethylenisch ungesättigten Verbindung
in Gegenwart des mindestens einen Polyurethans (P1),
mindestens eines Redoxinitiatorsystems (I) und
mindestens einer Eisenverbindung (F)
zumindest teilweise radikalisch polymerisiert und anschließend in einer zweiten Stufe ein Monomerengemisch (f) mindestens einer ethylenisch ungesättigten Verbindung
radikalisch polymerisiert,
wobei
das mindestens eine Polyurethan (P1) ausschließlich aus aliphatischen und/oder cycloaliphatischen Isocyanaten als isocyanatgruppenhaltigen Aufbaukomponenten aufgebaut ist und einen Gehalt an zumindest teilweise neutralisierten Säuregruppen unter 500 mmol pro kg Polyurethan aufweist,
das polymerisierte Monomerengemisch (e) der ersten Stufe eine Glasübergangstemperatur von mindestens 50 °C aufweist,
das polymerisierte Monomerengemisch (f) der zweiten Stufe eine Glasübergangstemperatur von bis zu 20 °C aufweist,
das Gewichtsverhältnis von Polyurethan (P1) zu der Summe der ethylenisch ungesättigten Verbindungen (e) und (f) der ersten und zweiten Stufen von 50 : 50 bis 30 : 70 beträgt, und
die Temperatur während der radikalischen Polymerisierung nicht mehr als 85 °C beträgt, und wobei die Glasübergangstemperatur gemäß ASTM-Vorschrift D3418-03 durch Differential Scanning Calorimetry (DSC) mit einer Aufheizrate von 10°C/min bestimmt wird.

Die erfindungsgemäßen Dispersionen benötigen für eine Verwendung in Beschichtungen keinen zusätzlichen hochmolekularen Vernetzer und sind gleichermaßen sowohl für Innen- als auch für Außenanwendungen geeignet. Sie zeigen insbesondere eine gute Eignung als Beschichtungen für Holz und Holzwerkstoffe, beispielsweise bei Verfilmung, Blockfestigkeit und Weißanlauf, sowie in einer bevorzugten Ausführungsform in der Trockentransparenz. Bei Einsatz des Monomers Diacetonacrylamid (DAAM) als Komponente (e2) oder (f2) (siehe unten) stellt es eine bevorzugte Ausführungsform der vorliegenden Erfindung dar, der Dispersion als niedermolekularen Vernetzer Adipinsäuredihydrazid (ADDH) zuzusetzen. Da sich ADDH überwiegend in der Wasserphase der Dispersion aufhält, erfolgt eine Vernetzung erst beim Trocknen durch Entfernen der Wasserphase. Daher kann ADDH bereits nach der Herstellung der Dispersion beigemischt werden, so daß für den Anwender keine Notwendigkeit für die Dosierung eines zusätzlichen Vernetzers besteht.

Ferner stellt es einen Vorteil dar, daß im Verfahren zur Herstellung der erfindungsgemäßen Dispersionen keine zusätzlichen Emulgatoren, Dispergierhilfsmittel und/oder Schutzkolloide eingesetzt werden brauchen.

Bei dem Polyurethan (P1) kann es sich um beliebiges Polyurethan handeln, das ausschließlich aus aliphatischen und/oder cycloaliphatischen, in dieser Schrift als (cyclo)aliphatisch zusammengefaßt, Isocyanaten als isocyanatgruppenhaltigen Aufbaukomponenten aufgebaut ist und einen Gehalt an zumindest teilweise neutralisierten Säuregruppen unter 500 mmol pro kg Polyurethan (P1), bevorzugt unter 400, besonders bevorzugt unter 350 und ganz besonders bevorzugt unter 300 mmol pro kg Polyurethan (P1).

Unter Säuregruppen werden dabei Carboxylgruppen, schwefelhaltige oder phosphorhaltige Säuren verstanden, bevorzugt Carboxylgruppen oder Sulfonatgruppen und ganz besonders bevorzugt Carboxylgruppen.

Diese Säuregruppen können ganz oder teilweise neutralisiert, also in ihrer anionischen Form vorliegen. Als Gegenionen zu diesen anionischen Gruppen sind Ammonium, Natrium und/oder Kalium bevorzugt.

Der Einsatz von (cyclo)aliphatischen Isocyanaten als Aufbaukomponenten des Polyurethans vermindert eine Vergilbung des Polyurethans in der resultierenden Beschichtung, wie es bei Einsatz von aromatischen Isocyanaten der Fall wäre. In Fällen, in denen eine Vergilbung der Beschichtung keine Rolle spielt, wäre der Einsatz aromatischer Isocyanate denkbar.

Durch den angegebenen Gehalt an Säuregruppen ist das Polyurethan (P1) in Wasser dispergierbar, so daß das Polyurethan (P1) in Form einer wäßrigen Polyurethandispersion eingesetzt wird und die ethylenisch ungesättigten Verbindungen (e) und (f) in einer Emulsionspolymerisation umgesetzt werden.

Ein höherer Gehalt an Säuregruppen der Polyurethane bewirkt in der Regel eine erhöhte Wasseranfälligkeit, was sich in einer erhöhten Wasseraufnahme und/oder einem stärkeren Weißanlauf bemerkbar macht.

Es stellt ein erfindungsgemäßes Merkmal dar, daß das Gewichtsverhältnis von Polyurethan (P1) zu der Summe der ethylenisch ungesättigten Verbindungen (e) und (f) der ersten und zweiten Stufen von 50 : 50 bis 30 : 70.

Es macht erfindungsgemäß keinen Unterschied, ob die Polyurethandispersion in situ vor der radikalischen Polymerisierung oder getrennt davon hergestellt wird, bevorzugt wird sie getrennt hergestellt.

Polyurethandispersionen werden technisch häufig über das sog. "Präpolymer-Mischverfahren" hergestellt. Darin werden Polyurethane zunächst in einem organischen Lösungsmittel, häufig N-Methylpyrrolidon (NMP), hergestellt und die so erhaltene Lösung des Polyurethans anschließend in Wasser dispergiert. Während und/oder nach deren Dispergierung in Wasser kann dann mittels einer Kettenverlängerung die Molmasse des Polyurethans weiter erhöht werden.

Je nach Siedepunkt des verwendeten Lösungsmittels verbleibt das Lösungsmittel auch bei einer destillativen Abtrennung zu mehr oder minder großen Anteilen in der Dispersion und beeinflußt dort dann die Eigenschaften der Polyurethandispersion.

Da nicht alle Lösungsmittel toxikologisch unbedenklich sind, sollte das verwendete Lösungsmittel möglichst ungiftig sein. Anstelle von NMP sind mittlerweile andere Lösungsmittel bekannt und werden erfindungsgemäß bevorzugt verwendet. Solche Lösungsmittel sind
- N-(Cyclo) Alkylpyrrolidone, bevorzugt N-Ethylpyrrolidon, wie es bekannt ist aus der WO 2005/090430,
- Gemische aus N-(Cyclo)alkylpyrroldon/Dialkylenglykol dialkylether, bevorzugt N-Ethylpyrrolidon/Dipropylenglykoldimethylether, oder N-Alkylcaprolactame, wie sie bekannt sind aus der DE 102007028890, sowie
- ringsubstituierte N-Alkylpyrrolidine, wie sie beispielsweise bekannt sind aus der internationalen Anmeldung mit dem Aktenzeichen PCT/EP2010/057868 und dem Anmeldedatum 7. Juni 2010
und werden erfindungsgemäß bevorzugt als Ersatz für das toxische NMP eingesetzt.

Bevorzugte wäßrige Polyurethandispersionen sind erhältlich durch
I) Herstellung eines Polyurethans durch Umsetzung von
   a) mindestens einem mehrwertigen Isocyanat mit 4 bis 30 C-Atomen,
   b) Diolen, von denen
      b1) 10 bis 100 mol-%, bezogen auf die Gesamtmenge der Diole (b), ein Molekulargewicht von 500 bis 5000 aufweisen, und
      b2) 0 bis 90 mol-%, bezogen auf die Gesamtmenge der Diole (b), ein Molekulargewicht von 60 bis 500 g/mol aufweisen,
      c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
      d) von den Monomeren (a), (b) und (c) verschiedene Monomere mit wenigstens einer Isocyanatgruppe oder wenigstens einer gegenüber Isocyanatgruppen reaktiven Gruppe, die darüber hinaus wenigstens eine hydrophile Gruppen oder eine potentiell hydrophile Gruppe tragen, wodurch die Wasserdispergierbarkeit der Polyurethane bewirkt wird,
         zu einem Polyurethan in Gegenwart eines Lösungsmittels und
II) anschließender Dispergierung des Polyurethans in Wasser,
III) wobei man vor, während und/oder nach Schritt II gegebenenfalls Polyamine zusetzen kann.

Als Monomere in (a) kommen die üblicherweise in der Polyurethanchemie eingesetzten Polyisocyanate in Betracht, beispielsweise aliphatische und cycloaliphatische Di- und Polyisocyanate, wobei die aliphatischen Kohlenwasserstoffreste beispielsweise 4 bis 12 Kohlenstoffatome, und die cycloaliphatischen Kohlenwasserstoffreste beispielsweise 6 bis 15 Kohlenstoffatome aufweisen, mit einer NCO-Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Ester des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, trans/trans-, das cis/cis- und das cis/trans-Isomere des 4,4'- oder 2,4'-Di(isocyanatocyclohexyl)methan, 1-Isocyanato-3,3,5- trimethyl-5-(isocyanatomethyl)cyclohexan (Isophorondiisocyanat), 2,2-Bis-(4-iso-cyanatocyclohexyl)-propan, 1,3- oder 1,4-Bis(isocyanatomethyl)cyclohexan oder 2,4-, oder 2,6-Diisocyanato-1-methylcyclohexan.

Es können auch Gemische der genannten Diisocyanate vorliegen.

Bevorzugt sind aliphatische und cycloaliphatische Diisocyanate, besonders bevorzugt sind Isophorondiisocyanat, Hexamethylendiisocyanat und 4,4'-Di(isocyanatocyclohexyl)methan (H₁₂MDI), ganz besonders bevorzugt Isophorondiisocyanat und/oder Hexamethylendiisocyanat.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten oder cycloaliphatischen Diisocyanaten mit insgesamt 6 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew.-% bezogen auf das Di- und Polyisocyanat(gemisch), bevorzugt 15 bis 60 Gew.-% und besonders bevorzugt 20 bis 55 Gew.-%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

### Weiterhin bevorzugt sind

1) Isocyanuratgruppen aufweisende Polyisocyanate von aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiondiisocyanate können in den Zubereitungen als alleinige Komponente oder im Gemisch mit anderen Polyisocyanaten, insbesondere den unter 1) genannten, eingesetzt werden.
3) Biuretgruppen aufweisende Polyisocyanate mit cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Verbindungen (a) kann man auch Isocyanate einsetzen, die neben den freien Isocyanatgruppen weitere verkappte Isocyanatgruppen, z.B. Uretdion- oder Urethangruppen tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethyl-benzylisocyanat (TMI).

Als Diole (b) kommen vornehmlich höhermolekulare Diole (b1) in Betracht, die ein Molekulargewicht von etwa 500 bis 5000, vorzugsweise von etwa 1000 bis 4000 g/mol haben.

Bei den Diolen (b1) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als mehrwertige Alkohole kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die von Hydroxycarbonsäuren der allgemeinen Formel HO-(CH₂)_{z}-COOH, wobei z eine Zahl von 1 bis 20, bevorzugt eine ungerade Zahl von 3 bis 19 ist, abgeleitet sind, z.B. ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Daneben kommen als Monomere (b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxydiphenyl)-propan oder Anilin erhältlich. Besonders bevorzugt ist Polyethylenglykol, Polypropylenglykol oder Polytetrahydrofuran mit einem Molekulargewicht von 500 bis 5000 g/mol, und vor allem 1000 bis 4500 g/mol, ganz besonders bevorzugt ist Polyethylenglykol oder Polypropylenglykol.

Die Polyesterdiole und Polyetherdiole können auch als Gemische im Verhältnis 0,1 : 1 bis 1 : 9 eingesetzt werden.

Es stellt eine bevorzugte Ausführungsform der vorliegenden Erfindung dar, ein Polyurethan (P1) einzusetzen, in dem es sich bei dem Diol b1) zumindest teilweise um einen Polyester handelt, der als Aufbaukomponente zumindest teilweise eine 1,2- oder 1,3-disubstituierte cyclische Dicarbonsäure, bevorzugt eine 1,3-disubstituierte cyclische Dicarbonsäure, besonders bevorzugt bevorzugt eine 1,3-disubstituierte aromatische Dicarbonsäure in eingebauter Form enthält.

Prinzipiell ist der Herstellung von Polyestern aus Ullmanns Encyklopädie der technischen Chemie, 4. Auflage, Band 19, S. 62 bis 65 bekannt. In der bevorzugten Ausführungsform werden Polyesterpolyole eingesetzt, die durch Umsetzung von zweiwertigen Alkoholen b1a) mit zweiwertigen Carbonsäuren b1b) erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden.

Die erfindungsgemäß zumindest teilweise eingesetzten Polyester enthalten zumindest zum Teil als eingesetzte zweiwertige Carbonsäuren oder deren Derivate eine 1,2- oder 1,3-disubstituierte cyclische Dicarbonsäure b1b1), bevorzugt eine 1,3-disubstituierte Dicarbonsäure in eingebauter Form. Neben den beiden Carboxygruppen in Position 1,2- oder 1,3- am Ring zueinander können die Dicarbonsäuren optional weitere Substituenten tragen, bevorzugt tragen sie keine weiteren.

Der Ring kann cycloaliphatisch oder bevorzugt aromatisch sein.

Bevorzugte 1,2- oder 1,3-disubstituierte cyclische Dicarbonsäure b1b1) sind Phthalsäure, Isophthalsäure, Phthalsäureanhydrid, Tetrahydrophthalsäureanhydrid, Hexahydrophthalsäureanhydrid, Tetrachlorphthalsäureanhydrid und Endomethylentetrahydrophthal-säureanhydrid, besonders bevorzugt ist Isophthalsäure.

Des weiteren können die Polyester weitere Dicarbonsäuren b1b2) enthalten, die andere als die genannten Dicarbonsäuren b1b1) sind.

Diese Polycarbonsäuren b1b2) können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Glutarsäureanhydrid, Maleinsäure, Maleinsäureanhydrid, Fumarsäure, dimere Fettsäuren.

Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Das Verhältnis von 1,2- oder 1,3-disubstituierten cyclischen Dicarbonsäuren b1b1) zu anderen Dicarbonsäuren b1b2) kann 10 - 100 mol%: 90 - 0 mol% betragen, bezogen auf die Gesamtmenge an Di- und Polycarbonsäuren im Polyester b1), bevorzugt 20 - 90 mol%: 80-10 mol%, besonders bevorzugt 30 - 70 mol%: 70 - 30 mol% und ganz besonders bevorzugt 30 - 50 mol%: 70 - 50 mol%.

Als mehrwertige Alkohole b1a) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,1-, 1,2-, 1,3- oder 1,4-Bis-(hydroxymethyl)cyclohexan, 2-Methyl-propan-1,3-diol, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Neopentylglykol sowie Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol.

Als Diole (b) können neben den Diolen (b1) noch niedermolekulare Diole (b2) mit einem Molekulargewicht von etwa 50 bis 500, vorzugsweise von 60 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, beispielsweise Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, wobei die unverzweigten Diole mit 2 bis 12 C-Atomen und einer gradzahligen Anzahl von C-Atomen sowie Pentandiol-1,5 und Neopentylglykol bevorzugt werden.

Bevorzugt beträgt der Anteil der Diole (b1), bezogen auf die Gesamtmenge der der Diolen (b) 10 bis 100 mol-% und der Anteil der Diole (b2), bezogen auf die Gesamtmenge der Diole (b) 0 bis 90 mol-%. Besonders bevorzugt beträgt das Verhältnis der Diole (b1) zu den Diolen (b2) 0,2 : 1 bis 5 : 1, besonders bevorzugt 0,5 : 1 bis 2 : 1.

Die Monomere (c), die von den Diolen (b) verschieden sind, dienen im allgemeinen der Vernetzung oder der Kettenverlängerung. Es sind im allgemeinen mehr als zweiwertige nicht-aromatische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind z.B. Trimethylolbutan, Trimethylolpropan, Trimethylolethan, Pentaerythrit, Glycerin, Zuckeralkohole, wie z.B. Sorbit, Mannit, Diglycerol, Threit, Erythrit, Adonit (Ribit), Arabit (Lyxit), Xylit, Dulcit (Galactit), Maltit oder Isomalt, oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen können im Präpolymer-Mischverfahren vor allem dann eingesetzt werden, wenn die Kettenverlängerung bzw. Vernetzung in Gegenwart von Wasser stattfinden soll (Schritt III), da Amine in der Regel schneller als Alkohole oder Wasser mit Isocyanaten reagieren. Das ist häufig dann erforderlich, wenn wäßrige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Es ist auch möglich, die Kettenverlängerung mit Polyaminen mit 2 primären und/oder sekundären Aminogruppen vor der Dispergierung in Wasser durchzuführen, wie beispielsweise in der WO 02/98939 gelehrt wird.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan oder höhere Amine wie Triethylentetramin, Tetraethylenpentamin oder polymere Amine wie Polyethylenamine, hydrierte Poly-Acrylnitrile oder zumindest teilweise hydrolysierte Poly-N-Vinylformamide jeweils mit einem Molgewicht bis zu 2000, bevorzugt bis zu 1000 g/mol.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der Polyurethane zur Kettenverlängerung der Präpolymeren eingesetzt werden können. Bei der Verwendung derartiger verkappter Polyamine werden diese im allgemeinen mit den Präpolymeren in Abwesenheit von Wasser vermischt und diese Mischung anschließend mit dem Dispersionswasser oder einem Teil des Dispersionswassers vermischt, so daß hydrolytisch die entsprechenden Polyamine freigesetzt werden.

Bevorzugt werden Gemische von Di- und Triaminen verwendet, besonders bevorzugt Gemische von Isophorondiamin und Diethylentriamin.

Der Anteil an Polyaminen kann bis zu 10, bevorzugt bis zu 8 mol-% und besonders bevorzugt bis zu 5 mol%, bezogen auf die Gesamtmenge der Komponenten (b) und (c) betragen.

Das im Schritt I hergestellte Polyurethan kann in der Regel bis zu 10 Gew.-%, bevorzugt bis zu 5 Gew.-% nicht abreagierte NCO-Gruppen aufweisen.
Das molare Verhältnis von NCO-Gruppen im im Schritt I hergestellten Polyurethan zu der Summe aus primären und sekundären Aminogruppen im Polyamin wird im Schritt III in der Regel so gewählt, daß es zwischen 3 : 1 und 1 : 3, bevorzugt 2 : 1 und 1 : 2, besonders bevorzugt 1,5 : 1 und 1 : 1,5; ganz besonders bevorzugt bei 1:1 liegt.

Ferner können zum Kettenabbruch in untergeordneten Mengen, d.h. bevorzugt in Mengen von weniger als 10 mol-%, bezogen auf die Komponenten (b) und (c), Monoalkohole eingesetzt werden. Sie dienen hauptsächlich zur Begrenzung des Molgewichts des Polyurethans. Beispiele sind Methanol, Ethanol, iso-Propanol, n-Propanol, n-Butanol, iso-Butanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol.

Um die Wasserdispergierbarkeit der Polyurethane zu erreichen, sind die Polyurethane neben den Komponenten (a), (b) und (c) aus von den Komponenten (a), (b) und (c) verschiedenen Monomere (d), die wenigstens eine Isocyanatgruppe oder wenigstens eine gegenüber Isocyanatgruppen reaktiven Gruppe und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen. Bei den (potentiell) hydrophilen Gruppen kann es sich um nichtionische oder bevorzugt um ionische, d.h. kationische oder anionische, hydrophile Gruppen oder um potentiell ionische hydrophile Gruppen und besonders bevorzugt um anionische hydrophile Gruppen oder um potentiell anionische hydrophile Gruppen handeln.

Der Anteil der Komponenten mit (potentiell) hydrophilen Gruppen an der Gesamtmenge der Komponenten (a), (b), (c) und (d) wird im allgemeinen so bemessen, daß der oben beschriebene Gehalt an Säuregruppen des Polyurethans (P1) erreicht wird.

Als nichtionische hydrophile Gruppen kommen beispielsweise gemischte oder reine Polyethylenglykolether aus vorzugsweise 5 bis 100, bevorzugt 10 bis 80 Ethylenoxid-Wiederholungseinheiten in Betracht. Die Polyethylenglykolether können auch Propylenoxid-Einheiten enthalten. Ist dies der Fall, so soll der Gehalt an Propylenoxid-Einheiten 50 Gew.%, bevorzugt 30 Gew.%, bezogen auf den gemischten Polyethylenglykolether, nicht übersteigen.

Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (d).

Bevorzugte Monomere mit nichtionischen hydrophilen Gruppen sind das Polyethylenglykol und Diisocyanate, die einen endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Als Monomere mit potentiell anionischen Gruppen werden üblicherweise aliphatische, cycloaliphatische, araliphatische oder aromatische Mono- und Dihydroxycarbonsäuren in Betracht, die mindestens eine alkoholische Hydroxylgruppe oder eine primäre oder sekundäre Aminogruppe tragen.

Solche Verbindungen werden beispielsweise durch die allgemeine Formel

RG-R⁴-DG

dargestellt, worin
RG mindestens eine gegen Isocyanat reaktive Gruppe bedeutet,
DG mindestens eine dispergieraktive Gruppe und
R⁴ einen 1 bis 20 Kohlenstoffatome enthaltenden aliphatischen, cycloaliphatischen oder aromatischen Rest.

Beispiele für RG sind -OH, -SH, -NH₂ oder -NHR⁵, worin R⁵ Methyl, Ethyl, *iso*-Propyl, n-Propyl, n-Butyl, *iso*-Butyl, *sek*-Butyl, *tert*-Butyl, Cyclopentyl oder Cyclohexyl sein kann.

Bevorzugt handelt es sich bei solchen Komponente z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybernsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-Cyclohexylaminopropansulfonsäure, N-Cyclohexylaminoethansulfonsäure sowie deren Alkali- Erdalkali- oder Ammoniumsalze und besonders bevorzugt um die genannten Monohydroxycarbon- und -sulfonsäuren sowie Monoaminocarbon- und -sulfonsäuren.

Ganz besonders bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel

HO-R¹-CR³(COOH)-R²-OH

in welcher R¹ und R² für eine C₁- bis C₄-Alkandiyl-Einheit und R³ für eine C₁- bis C₄-Alkyl-Einheit steht. Vor allem sind Dimethylolbuttersäure und besonders Dimethylolpropionsäure (DMPA) bevorzugt.

Weiterhin eignen sich entsprechende Dihydroxysulfonsäuren und Dihydroxyphosponsäuren wie 2,3-Dihydroxypropanphosphonsäure sowie die entsprechenden Säuren, in denen mindestens eine Hydroxygruppe durch eine Aminogruppe ersetzt ist, beispielsweise solche der Formel

H₂N-R¹-CR³(COOH)-R²-NH₂

in welcher R¹, R² und R³ die gleichen Bedeutungen haben können, wie oben angeführt.

Ansonsten geeignet sind Dihydroxyverbindungen mit einem Molekulargewicht über 500 bis 10000 g/mol mit mindestens 2 Carboxylatgruppen, die aus der DE-A 4 140 486 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxyverbindungen sind insbesondere die als Kettenverlängerer aufgeführten Monomere (b2) sowie die Diole (b1) geeignet.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Säuregruppen, Anhydridgruppen oder tertiäre Aminogruppen.

Ionische Monomere (d) oder potenziell ionische Monomere (d) sind z.B. in Ullmanns Encyklopädie der technischen Chemie, 4. Auflage, Band 19, S.311-313 und beispielsweise in der DE-A 1 495 745 ausführlich beschrieben.

Als potentiell kationische Monomere (d) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 2 bis 6 Kohlenstoffatomen bestehen. Weiterhin kommen tertiäre Stickstoffatome aufweisende Polyether mit vorzugsweise zwei endständigen Hydroxylgruppen, wie sie z.B. durch Alkoxylierung von zwei an Aminstickstoff gebundene Wasserstoffatome aufweisende Amine, z.B. Methylamin, Anilin, oder N,N'-Dimethylhydrazin, in an sich üblicher Weise zugänglich sind, in Betracht. Derartige Polyether weisen im allgemeinen ein zwischen 500 und 6000 g/mol liegendes Molgewicht auf.

Diese tertiären Amine werden entweder mit Säuren, bevorzugt starken Mineralsäuren wie Phosphorsäure, Schwefelsäure oder Halogenwasserstoffsäuren, starken organischen Säuren, wie beispielsweise Ameisen-, Essig- oder Milchsäure, oder durch Umsetzung mit geeigneten Quaternisierungsmitteln wie C₁- bis C₆-Alkylhalogeniden, z.B. Bromiden oder Chloriden, oder Di-C₁- bis C₆-Alkylsulfaten oder Di-C₁- bis C₆-Alkyl-carbonaten in die Ammoniumsalze überführt.

Als Monomere (d) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die anionischen hydrophilen Gruppen in Form ihrer Salze mit einem Alkaliion oder einem Ammoniumion als Gegenion vor.

Unter diesen genannten Verbindungen sind Hydroxycarbonsäuren bevorzugt, besonders bevorzugt sind Dihydroxyalkylcarbonsäuren, ganz besonders bevorzugt sind α,α-Bis(hydroxymethyl)carbonsäuren, insbesondere Dimethylolbuttersäure und Dimethylolpropionsäure und speziell Dimethylolpropionsäure.

In einer alternativen Ausführungsform können die Polyurethane sowohl nichtionische hydrophile als auch ionische hydrophile Gruppen, bevorzugt gleichzeitig nichtionische hydrophile und anionische hydrophile Gruppen enthalten.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a), (b), (c) und (d) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können
   0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Neben den Komponenten (a), (b), (c) und (d) werden Monomere mit nur einer reaktiven Gruppe im allgemeinen in Mengen bis zu 15 mol-%, bevorzugt bis zu 8 mol-%, bezogen auf die Gesamtmenge der Komponenten (a), (b), (c) und (d) eingesetzt.

Die Polyaddition der Komponenten (a) bis (d) erfolgt im allgemeinen bei Reaktionstemperaturen von 20 bis 180 °C, bevorzugt 50 bis 150 °C unter Normaldruck.

Die erforderlichen Reaktionszeiten können sich über wenige Minuten bis einige Stunden erstrecken. Es ist auf dem Gebiet der Polyurethanchemie bekannt, wie die Reaktionszeit durch eine Vielzahl von Parametern wie Temperatur, Konzentration der Monomere, Reaktivität der Monomeren beeinflußt wird.

Zur Beschleunigung der Reaktion der Diisocyanate können die üblichen Katalysatoren mitverwendet werden. Dafür kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat, Dioctylzinn-dilaurat und Dioctylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut- und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN-, OCN-, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²-, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als Polymerisationsapparate kommen Rührkessel in Betracht, insbesondere dann, wenn durch Mitverwendung von Lösungsmitteln für eine niedrige Viskosität und eine gute Wärmeabfuhr gesorgt ist.
Wird die Reaktion in Substanz durchgeführt, eignen sich aufgrund der meist hohen Viskositäten und der meist nur kurzen Reaktionszeiten besonders Extruder, insbesondere selbstreinigende Mehrschneckenextruder.

Im sogenannten "Präpolymer-Mischverfahren" wird zunächst ein Präpolymer hergestellt wird, das Isocyanat-Gruppen trägt. Die Komponenten (a) bis (d) werden hierbei so gewählt, daß das definitionsgemäße Verhältnis A:B größer 1,0 bis 3, bevorzugt 1,05 bis 1,5 beträgt. Das Präpolymer wird zuerst in Wasser dispergiert und gleichzeitig und/oder anschließend durch Reaktion der Isocyanat-Gruppen mit Aminen, die mehr als 2 gegenüber Isocyanaten reaktive Aminogruppen tragen, vernetzt oder mit Aminen die 2 gegenüber Isocyanaten reaktive Aminogruppen tragen, kettenverlängert. Eine Kettenverlängerung findet auch dann statt, wenn kein Amin zugesetzt wird. In diesem Fall werden Isocyanatgruppen zu Amingruppen hydrolysiert, die mit noch verbliebenen Isocyanatgruppen der Präpolymere unter Kettenverlängerung abreagieren.

Die mittlere Teilchengröße (z-Mittelwert), gemessen mittels dynamischer Lichtstreuung mit dem Malvern® Autosizer 2 C, der so hergestellten Polyurethandispersionen ist nicht erfindungswesentlich und beträgt im allgemeinen <1000 nm, bevorzugt <500 nm , besonders bevorzugt < 200 nm und ganz besonders bevorzugt zwischen 20 und unter 200 nm.

Die Polyurethandispersionen haben im allgemeinen einen Feststoffgehalt von 10 bis 75, bevorzugt von 20 bis 65 Gew.-% und eine Viskosität von 10 bis 500 m Pas (ICI Kegel/Platten Viskosimeter mit Messkopf C in Anlehnung an ASTM D4287), gemessen bei einer Temperatur von 20°C und einer Schergeschwindigkeit von 250 s⁻¹).

Gemäß der vorliegenden Erfindung findet die radikalische Polymerisierung in Gegenwart der oben hergestellten Polyurethandispersionen dergestalt statt, daß zwei unterschiedliche Monomerengemische in einer Art und Weise polymerisiert werden, daß Polymerteilchen aus mindestens zwei verschiedene Phasen resultieren, wobei das zuerst polymerisierte Monomerengemisch (e) eine Glasübergangstemperatur (T_{g}) von mindestens 50 °C, bevorzugt mindestens 60 °C und besonders bevorzugt mindestens 70 °C sowie eine Säurezahl unter 5 mg KOH/g aufweist und das zuletzt polymerisierte Monomerengemisch (f) eine Glasübergangstemperatur (T_{g}) von nicht mehr als 20 °C, bevorzugt nicht mehr als 10 °C, besonders bevorzugt nicht mehr als 0 °C aufweist.

Eine Berechnung der Glasübergangstemperatur nach bekannten Methoden auf Basis tabellierter Werte für bestimmte Monomere, wie beispielsweise nach Fox, führt nicht notwendigerweise zu unterschiedlichen Glasübergangstemperaturen der Bereiche, beispielsweise wenn Vernetzer als Monomere eingesetzt werden, deren Einfluß auf die Glasübergangstemperatur rechnerisch nicht erfaßt werden kann. Für Monomerengemische ohne Vernetzer kann die Berechnung der Glasübergangstemperatur nach Fox jedoch gute Näherungswerte liefern.

Die Glasübergangstemperatur T_{g}, wird in dieser Schrift bestimmt gemäß ASTM-Vorschrift D3418-03 über Differential Scanning Calorimetry (DSC) mit einer Aufheizrate von 10 °C/min.

Die angegebenen Glasübergangstemperaturen beziehen sich dabei auf Polymere, wie man sie aus den jeweiligen Monomerengemischen (e) bzw. (f) erhält und nicht auf die Kern-Schale Polymere gemäß der vorliegenden Erfindung.

Das erste Monomerengemisch (e) kann bevorzugt wie folgt zusammengesetzt sein
e1) mindestens 60, bevorzugt mindestens 70 und besonders bevorzugt mindestens 80 Gew.-% und bis zu 100, bevorzugt bis zu 95 und besonders bevorzugt bis zu 90 Gew.-% mindestens eines (Cyclo)Alkyl(meth)acrylats,
e2) 0 Gew.-%, bevorzugt mindestens 5 und besonders bevorzugt mindestens 10 Gew.-% und bis zu 40, bevorzugt bis zu 30 und besonders bevorzugt bis zu 20 Gew.-% mindestens eines (Meth)acrylats oder (Meth)acrylamids, das mindestens eine funktionelle Gruppe trägt,
e3) 0 bis 15 Gew.-%, bevorzugt 0 bis 10 und besonders bevorzugt 0 bis 5 Gew.-% radikalisch polymerisierbaren Monomeren mit genau einer radikalisch polymerisierbaren Doppelbindungen, die mindestens ein aromatisches Ringsystem enthalten,
e4) optional α,β-ungesättigte Carbonsäuren in Mengen, so daß der oben genannte Gehalt an Säuregruppen nicht überschritten wird, bevorzugt 0 Gew.-% und
e5) 0 bis 3 Gew.-%, bevorzugt 0 bis 1, besonders bevorzugt mindestens 0 bis 0,5 Gew.-% mindestens einer Verbindung, die mindestens zwei radikalisch polymerisierbare Doppelbindungen aufweist,
   mit der Maßgabe, daß die Summe immer 100 Gew.-% beträgt und die für diese Monomerenmischung genannte Glasübergangstemperatur und der erfindungsgemäße Gehalt an Säuregruppen eingehalten wird.
   Das zweite Monomerengemisch (f) kann bevorzugt wie folgt zusammengesetzt sein
f1) mindestens 60, bevorzugt mindestens 70 und besonders bevorzugt mindestens 80 Gew.-% und bis zu 100, bevorzugt bis zu 95 und besonders bevorzugt bis zu 90 Gew.-% mindestens eines (Cyclo)Alkyl(meth)acrylats,
f2) 0 Gew.-%, bevorzugt mindestens 5 und besonders bevorzugt mindestens 10 Gew.-% und bis zu 40, bevorzugt bis zu 30 und besonders bevorzugt bis zu 20 Gew.-% mindestens eines (Meth)acrylats oder (Meth)acrylamids, das mindestens eine funktionelle Gruppe trägt,
f3) 0 bis 5 Gew.-%, bevorzugt 0 bis 3 und besonders bevorzugt 0 Gew.-% radikalisch polymerisierbaren Monomeren, die mindestens ein aromatisches Ringsystem mit genau einer radikalisch polymerisierbaren Doppelbindungen enthalten,
f4) optional α,β-ungesättigte Carbonsäuren in Mengen, so daß der oben genannte Gehalt an Säuregruppen nicht überschritten wird und
f5) 0 bis 3 Gew.-%, bevorzugt 0 bis 1, besonders bevorzugt mindestens 0 bis 0,5 Gew.-% mindestens einer Verbindung, die mindestens zwei radikalisch polymerisierbare Doppelbindungen aufweist,
mit der Maßgabe, daß die Summe immer 100 Gew.-% beträgt und die für diese Monomerenmischung genannte Glasübergangstemperatur und der erfindungsgemäße Gehalt an Säuregruppen eingehalten wird.

Bei den (Cyclo)Alkyl(meth)acrylate (e1) und (f1) handelt es sich unabhängig voneinander bevorzugt um C₁-C₂₀-Alkyl(meth)acrylate oder C₅-C₁₂-Cycloalkyl(meth)acrylate.

Zu nennen sind als Beispiele für (Meth)acrylsäurealkylester (Meth)acrylsäuremethylester, (Meth)acrylsäureethylester, (Meth)acrylsäure-n-propylester, (Meth)acrylsäure-n-butylester, (Meth)acrylsäure-*iso*-butylester, (Meth)acrylsäure-*sek*-butylester, (Meth)-acrylsäure-*tert*-butylester, (Meth)acrylsäure-n-pentylester, (Meth)acrylsäure-*iso*-pentyl-ester, (Meth)acrylsäure-2-methyl-butylester, (Meth)acrylsäureamylester, (Meth)acrylsäure-n-hexylester, (Meth)acrylsäure-2-ethylbutylester, (Meth)acrylsäurepentylester, (Meth)acrylsäure-n-heptylester, (Meth)acrylsäure-n-octylester, (Meth)acrylsäure-2-ethylhexylester, (Meth)acrylsäure-2-propylheptylester, (Meth)acrylsäure-n-decylester, (Meth)acrylsäureundecylester und (Meth)acrylsäure-n-dodecylester.

Als Cycloalkyl(meth)acrylate zu nennen sind Cyclopentyl(meth)acrylat und Cyclohexyl(meth)acrylat.

Bevorzugt sind (Meth)acrylsäurealkylester mit einem C₁-C₁₀-Alkylrest, besonders bevorzugt Methylmethacrylat, Methylacrylat, n-Butylacrylat, n-Butylmethacrylat, n-Hexylacrylat, n-Octylacrylat, Ethylacrylat, (Meth)acrylsäure-*tert*-butylester, und 2-Ethylhexylacrylat.

Insbesondere sind auch Mischungen der (Meth)acrylsäurealkylester geeignet, beispielsweise zwei bis vier, bevorzugt zwei bis drei und besonders bevorzugt zwei.

Unter den Monomeren (e1) ist insbesondere zumindest teilweise Methylmethacrylat in solchen Mengen bevorzugt, daß die oben genannte Glasübergangstemperatur erreicht wird.

Unter den Monomeren (f1) sind insbesondere zumindest teilweise n-Butylacrylat und/oder 2-Ethylhexylacrylat in solchen Mengen bevorzugt, daß die oben genannte Glasübergangstemperatur erreicht wird.

Bei den Monomeren (e2) und (f2) handelt es sich unabhängig voneinander um mindestens ein (Meth)acrylat oder (Meth)acrylamid, das mindestens eine, bevorzugt ein bis drei, besonders bevorzugt ein bis zwei und ganz besonders bevorzugt genau eine funktionelle Gruppe trägt.

Bevorzugt sind die funktionellen Gruppen ausgewählt aus der Gruppe bestehend aus C₁-C₁₀-Alkyloxygruppen, Hydroxygruppen, primären Aminogruppen, sekundären Aminogruppen, tertiären Aminogruppen, Carbamatgruppen, Ureidogruppen, Carbonylgruppen und Epoxygruppen, besonders bevorzugt aus der Gruppe bestehend aus Hydroxygruppen, Ureidogruppen, Carbonylgruppen und Epoxygruppen.

Beispiele für Alkoxyalkyl(meth)acrylate sind beispielsweise (Meth)acrylsäure-2-methoxyethylester, (Meth)acrylsäure-2-ethoxyethylester, (Meth)acrylsäure-4-methoxybutylester und (Meth)acrylsäure-2-(2'-methoxyethoxy-)ethylester.

Hydroxyalkyl(meth)acrylate sind beispielsweise (Meth)acrylsäureformal, (Meth)acrylsäurehydroxymethylester, (Meth)acrylsäure-2-hydroxyethylester, (Meth)acrylsäure-2-hydroxypropylester, (Meth)acrylsäure-3-hydroxypropylester und (Meth)acrylsäure-4-hydroxybutylester, bevorzugt sind (Meth)acrylsäure-2-hydroxyethylester, (Meth)acrylsäure-2-hydroxypropylester, (Meth)acrylsäure-3-hydroxypropylester und (Meth)acrylsäure-4-hydroxybutylester, besonders bevorzugt sind (Meth)acrylsäure-2-hydroxyethylester und (Meth)acrylsäure-4-hydroxybutylester.

Epoxygruppen tragende (Meth)acrylate sind beispielsweise (Meth)acrylsäureglycidylester und Crotonsäureglycidylester.

Carbonylgruppen tragende (Meth)acrylate sind beispielsweise 2'-(Acetylacetoxy) ethyl methacrylat, Acetoacetoxyethyl acrylat, Acetoacetoxypropyl methacrylat, Acetoacetoxybutyl methacrylat, Methacrylsäure 2'-(2"-oxo-imidazolidin-1"-yl)-ethyl ester (U reido ethyl methacrylat), Diacetonacrylamid (DAAM) und Diacetonmethacrylamid, bevorzugt sind 2'-(Acetylacetoxy) ethyl methacrylat, Ureido ethyl methacrylat und Diacetonacrylamid.

Bevorzugte Monomere (e2) sind Acrylsäure-2-hydroxyethylester, Acrylsäure-4-hydroxybutylester, Methacrylsäure-2-hydroxyethylester, Ureido ethyl methacrylat und Diacetonacrylamid.

Bevorzugtes Monomer (f2) ist Glycidylmethacrylat, Ureido ethyl methacrylat und Diacetonacrylamid.

Monomere (e3) und (f3), sind solche radikalisch polymerisierbaren Monomere die mindestens ein aromatisches Ringsystem enthalten.

Als vinylaromatische Verbindungen kommen Styrol, Vinyltoluol, Vinylnaphthalin, α- und p-Methylstyrol, α-Butylstyrol, 4-n-Butylstyrol, 4-n-Decylstyrol und vorzugsweise Styrol in Betracht.

α,β-Ungesättigte Carbonsäuren (e4) und (f4) sind beispielsweise (Meth)acrylsäure, Crotonsäure, Itaconsäure, Maleinsäure oder Fumarsäure. Die Säuren können optional mit Ammonium, Kalium und/oder Natrium zumindest teilweise neutralisiert sein.

(Meth)Acrylsäure steht in dieser Beschreibung für Methacrylsäure und Acrylsäure.

Vernetzer (e5) und (f5) sind solche, die mindestens zwei radikalisch polymerisierbare Doppelbindungen aufweisen, bevorzugt 2 bis 6, besonders bevorzugt 2 bis 4, ganz besonders bevorzugt 2 bis 3 und insbesondere genau 2.

Bevorzugt sind die radikalisch polymerisierbaren Doppelbindungen ausgewählt aus der Gruppe bestehend aus Acrylat, Methacrylat, Allylether und Allylester.

Bevorzugte Monomere (e5) und (f5) sind Allylacrylat, Allylmethacrylat, Methallylacrylat, Methallylmethacrylat, Di- und Poly(meth)acrylate 1,2-, 1,3- und 1,4-Butandioldiacrylat, 1,2- und 1,3-Propylenglykol(meth)acrylat, 1,6-Hexandioldi(meth)acrylat, 1,2-Ethylenglykoldi(meth)acrylat, Neopentylglykoldi(meth)acrylat, Diethylenglykoldi(meth)acrylat, Triethylenglykoldi(meth)acrylat, Tetraethylenglykoldi(meth)acrylat, Trimethylolpropantri-(meth)acrylat, Trimethylolethantri(meth)acrylat, Pentaerythritoltri- und tetra(meth)acrylat sowie Divinylbenzol.

Besonders bevorzugte Monomere (e5) und (f5) sind Allylacrylat, Allylmethacrylat, 1,4-Butandioldiacrylat, 1,6-Hexandioldi(meth)acrylat, 1,2-Ethylenglykoldi(meth)acrylat und Divinylbenzol.

Das Gewichtsverhältnis der Summe der Monomere (e) zur Summe der Monomere (f) kann von 10:90 bis 90:10 reichen, bevorzugt von 20:80 bis 80:20, besonders bevorzugt von 30:70 bis 70:30, ganz besonders bevorzugt von 40:60 bis 60:40 und insbesondere etwa 50:50.

Das aus der letzten Stufe erhaltene Produkt weist in der Regel eine Teilchengröße von 50 bis 300 nm, bevorzugt von 60 bis 250, besonders bevorzugt von 70 bis 200 nm auf. Als Teilchengröße für dieses Produkt wird der gewichtsmittlere Durchmesser der Polymerpartikel in der Dispersion (bestimmt gemäß ISO13321 mit einem High Performance Particle Sizer (HPPS) von der Fa. Malvern bei 22 °C und einer Wellenlänge von 633 nm) verstanden.

Es stellt einen Vorteil der vorliegenden Erfindung dar, daß auf die Anwesenheit von zusätzlichen Emulgatoren, Dispergierhilfsmitteln und Schutzkolloiden verzichtet werden kann.

Als Emulgatoren werden solche Verbindungen bezeichnet, die in der Lage sind durch Verringerung der Grenzflächenspannung zwischen einer organischen und eine wäßrigen Phase eine Dispersion dieser Phasen zu stabilisieren.

Als Polymerisationsinitiatoren kommen im Rahmen der vorliegenden Erfindung Redoxinitiatorsysteme (I) aus eine oxidierenden (11) und einer reduzierenden Komponente (12) in Betracht, die in der Lage sind, eine radikalische Emulsionspolymerisation in wässerigen Medien auszulösen. Sie werden im allgemeinen in Mengen von 0,1 bis 10 Gew.-%, vorzugsweise von 0,2 bis 4 Gew.-%, bezogen auf die Monomeren, eingesetzt.

Übliche Verbindungen (11) sind anorganische Peroxide, z.B. Natrium- und Ammoniumperoxidisulfat und Wasserstoffperoxid, organische Peroxide wie Dibenzoylperoxid oder tert.-Butylhydroperoxid sowie Azoverbindungen wie Azoisobuttersäuredinitril.

Als weitere Beispiele seien genannt Peroxodisulfate, beispielsweise Kalium-, Natrium- oder Ammoniumperoxodisulfat, Peroxide, beispielsweise Natriumperoxid oder Kaliumperoxid, Perborate, wie beispielsweise Ammonum-, Natrium- oder Kaliumperborat, Monopersulfate, beispielsweise Ammonium-, Natrium- oder Kaliumhydrogenmonopersulfat, sowie Salze von Peroxycarbonsäuren, beispielsweise Ammonium-, Natrium-, Kalium- oder Magnesium Monoperoxyphthalat. tert. Butylhydroperoxid, tert. Amylhydroperoxid, Cumylhydroperoxid, Peressigsäure, Perbenzoesäure, Monoperphthalsäure oder meta-Chlorperbenzoesäure sowie Ketonperoxide, Dialkylperoxide, Diacylperoxide oder gemischte Acyl-Alkylperoxide.
Beispiele für Diacylperoxide sind Dibenzoylperoxid und Diacetylperoxid.
Beispiele für Dialkylperoxide sind Di-tert-butylperoxid, Di-cumylperoxid, Bis-(α,α-dimethylbenzyl)peroxid und Diethylperoxid.
Ein Beispiel für gemischte Acyl-Alkylperoxide ist tert. Butylperbenzoat.
Ketonperoxide sind beispielsweise Acetonperoxid, Butanonperoxid und 1,1'-Peroxy-bis-cyclohexanol.
Weiterhin genannt seien beispielsweise 1,2,4-Trioxolan oder 9,10-Dihydro-9,10-epidioxidoanthracen.

Reduzierende Co-Initiatoren (12) sind bevorzugt das Hydroxymethansulfinsäure, Isoascorbinsäure und Ascorbinsäure sowie jeweils deren Derivate und Salze, bevorzugt die Natriumsalze, besonders bevorzugt eingesetzt werden Ascorbinsäure und das Natriumsalz von Hydroxymethansulfinsäure. Letzteres ist beispielsweise als Rongalit® C von der BASF oder als Bruggolit® FF6M von der Firma Brüggemann erhältlich.

Bei der mindestens einen Eisenverbindung (F) handelt es sich bevorzugt um Eisen-II-salze, besonders bevorzugt um komplexierte Eisen-II-salze, wobei es sich bei dem Komplexbildner beispielsweise um Ethylendiamin tetraacetat oder Nitrilotriacetat und deren Natrium-, Kalium- oder Ammoniumsalze handeln kann.

Die Herstellung wäßriger Polymerisatdispersionen nach dem Verfahren der radikalischen Emulsionspolymerisation ist an sich bekannt (vgl. Houben-Weyl, Methoden der organischen Chemie, Band XIV, Makromolekulare Stoffe, I. c., Seiten 133ff).

Besonders bewährt hat sich ein Zulauf-Verfahren, bei dem man das Polyurethan (P1) sowie zumindest einen Teil des Initiators (11) vorlegt und die Polymerisation durch Zugabe des Initiators (12) und des Monomeren (e) startet. Nach vollständiger oder teilweiser Abreaktion der Monomere (e) wird dann das Monomerengemisch (f) zugeführt und die Polymerisierung bis zum im wesentlichen vollständigen Umsatz geführt.

In einer weiteren Ausführungsform legt man das Polyurethan (P1) vor und gibt Monomerengemisch (e) und einen Teil des Initiators (I1) zum Starten gleichzeitig dosiert zu. Nach vollständiger oder teilweiser Abreaktion der Monomere (e) wird dann das Monomerengemisch (f) zugeführt und die Polymerisierung bis zum im wesentlichen vollständigen Umsatz geführt.

Die reduzierende Komponente (12) des Initiators (I) wird in der Regel kurz nach Start der Zugabe der Komponente (I1) zugegeben, kann aber auch gleichzeitig mit der Komponente (I1) zugegeben werden.

Die Abfolge der Monomeren (e) und (f) ist davon abhängig, ob man zwischen den einzelnen Schalen einen Übergang der Eigenschaften mit einem Gradienten erreichen will, dazu begint man mit der Zufuhr des Monomerengemischs (f) bereits bei einem Teilumsatz des Monomerengemischs (e), oder ob man zunächst das Monomerengemisch (e) im wesentlichen abreagieren läßt und erst anschließend das Monomerengemisch (f) zuführt.

Dabei können die Monomere auf mehrere Zuläufe verteilt werden und mit variabler Dosierungsgeschwindigkeit und/oder variablem Gehalt an einem oder mehreren Monomeren versehen werden.

Optional können auch Molekulargewichtsregler anwesend sein. Durch die Anwesenheit von Reglern in einer Polymerisierung wird durch Kettenabbruch und Start einer neuen Kette durch das so entstandene neue Radikal in der Regel das Molekulargewicht des entstehenden Polymers verringert und bei Anwesenheit von Vernetzern auch die Anzahl der Vernetzungsstellen (Vernetzungsdichte) verringert. Wird im Verlauf einer Polymerisierung die Konzentration an Regler erhöht, so wird die Vernetzungsdichte im Verlauf der Polymerisierung weiter verringert.

Derartige Molekulargewichtsregler sind bekannt, beispielsweise kann es sich um Mercaptoverbindungen handeln, wie bevorzugt tertiäres Dodecylmercaptan, n-Dodecylmer-captan, iso-Octylmercaptopropionsäure, Mercaptopropionsäure, dimeres α-Methylstyrol, 2-Ethylhexyl-thioglykolsäureester (EHTG), 3-Mercaptopropyl-trimethoxysilan (MTMO) oder Terpinolen. Die Molekulargewichtsregler sind bekannt und beispielsweise beschrieben in Houben-Weyl, Methoden der organischen Chemie, Bd. XIV/1, S. 297 ff., 1961, Stuttgart.

Die Polymerisierung wird erfindungsgemäß bei einer Temperatur von nicht mehr als 85 °C durchgeführt, bevorzugt bei 50 bis 85 °C, besonders bevorzugt bei 60 bis 85 °C.

Die so erhaltenen wäßrigen Polymerdispersion haben vorzugsweise einen Feststoffgehalt von 30 bis 65, besonders bevorzugt von 35 bis 55 Gew.-%.

Die Dispersionen können nach der Herstellung, falls gewünscht, einer physikalischen Desodorierung unterworfen werden.

Eine physikalische Desodorierung kann darin bestehen, daß die Dispersion mit Wasserdampf, einem sauerstoffhaltigen Gas, bevorzugt Luft, Stickstoff oder überkritischem Kohlendioxid beispielsweise in einem Rührbehälter, wie in der DE-AS 12 48 943 beschrieben, oder in einer Gegenstromkolonne, wie in der DE-A 196 21 027 beschrieben, gestrippt wird.

Die erfindungsgemäßen Dispersionen eignen sich in vorteilhafter Weise zum Beschichten und Imprägnieren von Substraten. Geeignete Substrate sind Holz, Holzfurnier, Papier, Pappe, Karton, Textil, Leder, Vlies, Kunststoffoberflächen, Glas, Keramik, mineralische Baustoffe, Metalle oder beschichtete Metalle.

In einer bevorzugten Ausführungsform werden die erfindungsgemäßen Dispersionen zur Beschichtung von Holz und Holzfurnier, besonders bevorzugt Holz eingesetzt.

Möglich ist der Einsatz für Holz in Außen- oder Innenanwendungen, bevorzugt in Außenanwendungen.

Beispiele für Holz-Außenanwendungen sind beispielsweise Türen und Fenster.

Beispiele für Holz-Innenanwendungen sind beispielsweise Parkett und Möbel, sowie Tischler- und Schreineranwendungen.

Beispiele für Holzuntergründe sind Eiche, Fichte, Kiefer, Buche, Ahorn, Kastanie, Platane, Rubinie, Esche, Birke, Pinie, Meranti und Ulme, sowie Kork.

Die erfindungsgemäß hergestellten Dispersionen mit anderen für die angeführten Anwendungen typischen Komponenten vermischt werden, beispielsweise Tenside, Detergentien, Farbstoffe, Pigmente, Füllstoffe oder Lichtschutzmittel.

Ein weiterer Gegenstand der vorliegenden Erfindung sind Beschichtungsmassen, enthaltend mindestens eine erfindungsgemäße Polymerdispersion sowie damit beschichtete Gegenstände.

Die erfindungsgemäßen Bindemittelzusammensetzungen kommen vorzugsweise in wässrigen Anstrichmitteln zum Einsatz. Diese Anstrichmittel liegen beispielsweise in Form eines unpigmentierten Systems (Klarlacks) oder eines pigmentierten Systems vor. Der Anteil der Pigmente kann durch die Pigmentvolumenkonzentration (PVK) beschrieben werden. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}). Anstrichmittel lassen sich anhand der PVK beispielsweise wie folgt einteilen:

| | |
|---|---|
| hochgefüllte Innenfarbe, waschbeständig, weiß/matt | ca. 85 |
| Innenfarbe, scheuerbeständig, weiß/matt | ca. 80 |
| Halbglanzfarbe, seidenmatt | ca. 35 |
| Halbglanzfarbe, seidenglänzend | ca. 25 |
| Hochglanzfarbe | ca. 15-25 |
| Außenfassadenfarbe, weiß | ca. 45-55 |
| Klarlack | < 5 |

Diese Dispersionen werden bevorzugt eingesetzt in PVK<50, besonders bevorzugt PVK<35 und noch starker bevorzugt in niedrig gefüllten Systemen (PVK<25) und Klarlacke (PVK<5).

Geeignete Füllstoffe in Klarlacksystemen sind z. B. Mattierungsmittel, die so gewünscht den Glanz stark beeinträchtigen. Mattierungsmittel sind in der Regel transparent und können sowohl organisch als auch anorganisch sein. Anorganische Füllstoffe auf Basis von Silika sind am besten geeignet und sind weit verbreitet im Handel erhältlich. Beispiele sind die Syloid®-Marken von W.R. Grace & Company und die Acematt®-Marken von der Fa. Evonik GmbH. Organische Mattierungsmittel sind z.B. erhältlich von der Fa. BYK-Chemie GmbH unter die Ceraflour®- und die Ceramat®-Marken, von der Fa. Deuteron GmbH unter die Deuteron MK®-Marke. Andere geeignete Füllstoffe für Dispersionsfarben sind Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Ropaque®- und AQACell®-Dispersionen. Weiterhin geeignet sind die Luconyl®-Marken der Fa. BASF SE, wie z.B. das Lyconyl®-Gelb, Luconyl®-Braun und Luconyl®-Rot, insbesondere die transparanten Varianten.

Das erfindungsgemäße Beschichtungsmittel (wässrige Anstrichmittel) kann neben der Polymerdispersion, gegebenenfalls zusätzliche filmbildende Polymere, Pigment und weitere Hilfsmittel enthalten.

Zu den üblichen Hilfsmitteln zählen Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.
Wichtiger sind die Filmbildehilfsmittel, die Verdicker und Entschäumer. Geeignete Filmbildehilfsmittel sind z.B. Texanol® von der Fa. Eastman Chemicals und die Glykolether und -Ester z.B. im Handel erhältlich von BASF SE, unter den Namen Solvenon® und Lusolvan®, und von Dow unter den Handelsnamen Dowanol®. Die Menge beträgt vorzugsweise <10 Gew.-% und besonders bevorzugt < 5 Gew.-% auf Gesamtformulierung. Es ist auch möglich völlig ohne Lösemittel zu formulieren.

Weitere geeignete Hilfsmittel sind Verlaufsmittel, Entschäumer, Biozide und Verdicker. Geeignete Verdicker sind z. B. Assoziativverdicker, wie Polyurethanverdicker. Die Menge des Verdickers beträgt vorzugsweise weniger als 2,5 Gew.-%, besonders bevorzugt weniger als 1,5 Gew.-% Verdicker, bezogen auf Feststoffgehalt des Anstrichmittels. Weitere Formulierungshinweise für Holzanstriche sind ausführlich beschrieben in ,water-based acrylates for decorative coatings' von den Autoren M. Schwartz und R. Baumstark, ISBN 3-87870-726-6.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln.

In dieser Schrift verwendete ppm- und Prozentangaben beziehen sich, falls nicht anders angegeben, auf Gewichtsprozente und -ppm.

### Beispiele

Es wurde ein Polyurethan PU-I wie folgt hergestellt:

392 g (0,196 mol) eines Polyesterols der OH-Zahl 56, hergestellt aus einer äquimolaren Mischung von Adipinsäure und Isophthalsäure und Hexandiol-1,6, 39,4 g (0,294 mol) Dimethylolpropionsäure, 70,6 g (0,784 mol) Butandiol-1,4 und 98 g Aceton wurden in einer Druckapparatur vorgelegt und auf 45°C erwärmt. Dazu wurden 339,2 g (1,526 mol) Isophorondiisocyanat gegeben und vier Stunden bei 90°C gerührt. Dann wurde mit 800 g Aceton verdünnt, auf Normaldruck entspannt und auf 35°C abgekühlt. Der NCO-Gehalt der Lösung wurde zu 1,4 Gew.% bestimmt.

Nach Zugabe von 3,9 g (0,0229 mol) Isophorondiamin und 31,0 g (0,2646 mol) Diethylethanolamin wurde mit 1260 g Wasser innerhalb von 10 Minuten dispergiert. Unmittelbar danach wurde eine Mischung von 10,5 g (0,1022 mol) Diethylentriaminin 98g Wasser und 250 g Wasser zugegeben und danach das Aceton abdestilliert.
Man erhielt eine wässrige Polyurethan-Dispersion mit 38 % Festgehalt.

Es wurde als Polyurethan PU-II, ein Handelsprodukt der Fa. BASF SE, Ludwigshafen, eingesetzt. PU-II ist eine eine polyetherbasierende aliphatische Polyurethandispersion (BASFmit einer Teilchengröße von 70 nm (gemessen per Lichtstreuung),) auf Basis Isophorondiisocyanat und einem Polyalkylenglykol. mit einemgewichtsmittleren Molgewicht von 4000 g/mol und einer Teilchengröße von 70 nm (gemessen perLichtstreuung)

Es wurde ein Polyacrylat-Dispersion PA-I wie folgt hergestellt:

In einem mit Dosiereinrichtungen und Temperaturregelung ausgerüsteten Polymerisationsgefäß wurden bei 20 bis 25 °C (Raumtemperatur) unter Stickstoffatmosphäre 200,8 g entionisiertes Wasser und
35,0 g einer 15 gew.-%igen wässrigen Lösung von Natriumlaurylsulfat vorgelegt und unter Rühren auf 87 °C aufgeheizt. Bei Erreichen dieser Temperatur wurden 29,8 g von Zulauf 1 und anschließend unter Aufrechterhaltung der Temperatur 2,0 g von Zulauf 3 zugegeben und 5 Minuten polymerisiert. Danach wurden zeitgleich beginnend die Restmenge von Zulauf 1 innerhalb von 120 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 gestartet und innerhalb von 45 Minuten mit gleichbleibendem Mengenstrom kontinuierlich zudosiert.

**Zulauf 1 (homogene Mischung aus):**

| | |
|---|---|
| 329,1 g | entionisiertes Wasser |
| 23,3 g | einer 15 gew.-%igen wässrigen Lösung von Natriumlaurylsulfat |
| 5,7 g | einer 50 gew.-%igen wässrigen Lösung von Acrylamid |
| 5,1 g | Acrylsäure |
| 27,0 g | einer 25 gew.-%igen Lösung von Ureidomethacrylat in Methylmethacrylat (Plex^{®} 6844-O der Fa. Röhm GmbH) |
| 199,2 g | Methylmethacrylat und |
| 285,5 g | 2-Ethylhexylacrylat |

**Zulauf 2 (homogene Mischung aus):**

| | |
|---|---|
| 174,4 g | entionisiertes Wasser |
| 8,9 g | einer 15 gew.-%igen wässrigen Lösung von Natriumlaurylsulfat |
| 5,1 g | Acrylsäure |
| 27,0 g | einer 25 gew.-%igen Lösung von Ureidomethacrylat in Methylmethacrylat (Plex^{®} 6844-O der Fa. Röhm GmbH) und |
| 148,2 g | Methylmethacrylat |

**Zulauf 3 (homogene Lösung aus):**

| | |
|---|---|
| 13,0 g | entionisiertem Wasser und |
| 1,0 g | Natriumperoxodisulfat |

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 22,4 g einer 5 gew.-%igen wässrigen Wasserstoffperoxid-Lösung und eine Lösung aus 1,0 g Ascorbinsäure und 26,5 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 5,9 g einer 25 gew.-%igen wässrigen Ammoniaklösung neutralisiert und über einen 125 µm Filter filtriert.

Die erhaltenen 1544 g der wässrigen Polymerisatdispersion wiesen einen Feststoffgehalt von 44,7 Gew.-% auf. Die MFT betrug 13°C. Die mit entionisiertem Wasser verdünnte wässrige Polymerisatdispersion wies einen mittels dynamischer Lichtstreuung ermittelten Teilchendurchmesser von 95 nm. Die Glasübergangtemperatur der ersten Stufe gemessen mit DSC betrug -5°C und die der zweiten Stufe 105°C.

### Vergleichsbeispiel 1:

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 105,7 g | entionisiertes Wasser und |
| 209,3 g | des oben hergestellten PU-I |

vorgelegt und unter Rühren auf 85 °C aufgeheizt. Bei Erreichung dieser Temperatur wurden 24,0 g einer 10 gew.-%igen wässrigen Lösung von tert-Butylhydroperoxidlösung und 40,0 g Wasser zugegeben.

Anschließend wurde unter Aufrechterhaltung der Temperatur 63,6 g einer 2,87%igen wässrigen Lösung von Rongalit C (Natriumsalz von Hydroxymethansulfinsäure, BASF) innerhalb von 140 Minuten bei gleichbleibendem Mengenstrom kontinuierlich zudosiert. Fünf Minuten nach Beginn des Rongalit C-Zulaufs wurde parallel dem Polymerisationsgemisch innerhalb von 40 Minuten bei gleichbleibendem Mengenstrom kontinuierlich 89,6 g Styrol zudosiert. Zehn Minuten nach dem Zulaufende des Styrolzulaufs wurde innerhalb von 40 Minuten bei gleichbleibendem Mengenstrom Zulauf 2 kontinuierlich zudosiert.

Nach Beendigung des Zulaufs 2 ließ man das Polymerisationsgemisch noch 30 Minuten bei 85 °C nachreagieren.

Anschließend wurde die erhaltene wässrige Polymerisatdispersion auf Raumtemperatur abgekühlt und über ein 125 µm Filter filtriert.

**Zulauf 2 (homogene Mischung aus):**

| | |
|---|---|
| 3,36 g | Glycidylmethacrylat |
| 3,36 g | Hydroxyethylacrylat |
| 43,10 g | Methylmethacrylat |
| 28,56 g | Butylacrylat |

Die erhaltene wässrige Polymerisatdispersion wies einen Feststoffgehalt von 40,1 Gew.-% auf. Bei der Synthese kam es zur Bildung von mehr als 2g sprödem Koagulat an Glaswandung und Rührer.

### Beispiel 1:

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 206,3 g | entionisiertes Wasser und |
| 194,6 g | des oben hergestellten PU-I und |
| 4,8 g | einer 0,5%igen wässrigen Lösung von Dissolvine® E-FE6 (Eisen-Kalium-Ethylendiamintetraacetatkomplex Akzo) |

vorgelegt und unter Rühren auf 60 °C aufgeheizt. Bei Erreichung dieser Temperatur wurden 3,0 g einer 10 gew.-%igen wässrigen Lösung von tert-Butylhydroperoxidlösung und 5,0 g Wasser zugegeben.
Anschließend wurde unter Aufrechterhaltung der Temperatur 7,9 g einer 2,87%igen wässrigen Lösung von Rongalit C (BASF) innerhalb von 140 Minuten bei gleichbleibendem Mengenstrom kontinuierlich zudosiert. Fünf Minuten nach Beginn des Rongalit C-Zulaufs wurde parallel dem Polymerisationsgemisch innerhalb von 40 Minuten bei gleichbleibendem Mengenstrom kontinuierlich Zulauf 1 zudosiert. Zehn Minuten nach dem Zulaufende von Zulauf 1 wurde innerhalb von 40 Minuten bei gleichbleibendem Mengenstrom Zulauf 2 kontinuierlich zudosiert.

Nach Beendigung des Zulaufs 2 ließ man das Polymerisationsgemisch noch 30 Minuten bei 60 °C nachreagieren.

Anschließend wurde die erhaltene wässrige Polymerisatdispersion auf Raumtemperatur abgekühlt, 2,02 g Adipinsäuredihydrazid in 14,8 g Wasser zugegeben und über ein 125 µm Filter filtriert.

**Zulauf 1 (homogene Mischung aus):**

| | |
|---|---|
| 4,03g | Diacetonacrylamid |
| 4,03g | Butandiolmonoacrylat |
| 5,04g | Butylacrylat |
| 5,04g | Styrol |
| 32,26g | Methylmethacrylat |

**Zulauf 2 (homogene Mischung aus):**

| | |
|---|---|
| 81,31g | Butylacrylat |
| 36,29g | Methylmethacrylat |

Die erhaltene wässrige Polymerisatdispersion wies einen Feststoffgehalt von 40,6 Gew.-% auf, eine Teilchengröße von 133 nm (bestimmt per High Performance Particle Sizer, HPPS) und eine Mindestfilmbildetemperatur von 10°C. Bei dieser Art der Reaktionsführung entstand weniger als 0,1 g Koagulat in der Dispersion.

### Vergleichsbeispiel 2:

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 127,5 g | entionisiertes Wasser und |
| 324,3 g | des oben hergestellten PU-I |

vorgelegt und unter Rühren (150 Umdrehungen pro Minute, Ankerrührer) auf 85 °C aufgeheizt. Bei Erreichung dieser Temperatur wurden 17,1 g einer 7 gew.-%igen wässrigen Lösung von Natriumperoxodisulfat zugegeben.

Zwei Minuten nach dieser Zugabe wurde dem Polymerisationsgemisch unter Aufrechterhaltung der Temperatur innerhalb von 70 Minuten bei gleichbleibendem Mengenstrom kontinuierlich 60,0 g Methylmethacrylat zudosiert (Zulauf 1). Anschließend wurde innerhalb von 70 Minuten bei gleichbleibendem Mengenstrom Zulauf 2 kontinuierlich zudosiert.

Nach Beendigung des Zulaufs 2 ließ man das Polymerisationsgemisch noch 90 Minuten bei 85 °C nachreagieren.

Anschließend wurde die erhaltene wässrige Polymerisatdispersion auf Raumtemperatur abgekühlt, mit 2,4 g Adipinsäuredihydrazid in 17,6 g entionisiertem Wasser versetzt und über ein 125 µm Filter filtriert.

**Zulauf 2 (homogene Mischung aus):**

| | |
|---|---|
| 4,80 g | Diacetonacrylamid |
| 37,20 g | Methylmethacrylat |
| 18,0 g | n-Butylmethacrylat |

Die erhaltene wässrige Polymerisatdispersion wies einen Feststoffgehalt von 39,1 Gew.-% auf. Bei der Synthese kam es zur Bildung von insgesamt mehr als 8g sprödem Koagulat an Glaswandung, Rührer und in der Dispersion.

### Vergleichsbeispiel 3:

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 0,17 g | entionisiertes Wasser und |
| 348,8 g | des oben hergestellten PU-I |

vorgelegt und unter Rühren (150 Umdrehungen pro Minute, Ankerrührer) auf 85 °C aufgeheizt. Bei Erreichung dieser Temperatur wurden 64,0 g einer 3,75 gew.-%igen wässrigen Lösung von t-Butylhydroperoxid zugegeben.

Nach dieser Zugabe wurde gleichzeitig begonnen, dem Polymerisationsgemisch unter Aufrechterhaltung der Temperatur innerhalb von 140 Minuten bei gleichbleibendem Mengenstrom kontinuierlich 63,55 g einer 2,87 %igen wässrigen Lösung von Rongalit-C zuzudosieren und eine Mischung von 12,0 g Butandioldiacrylat mit 72,0 g Styrol innerhalb von 40 Minuten gleichmäßig zuzudosieren (Zulauf 1). Nach dem Ende von Zulauf 1 wurde innerhalb von 40 Minuten bei gleichbleibendem Mengenstrom Zulauf 2 kontinuierlich zudosiert.

Nach Beendigung des Zulaufs 2 ließ man das Polymerisationsgemisch noch 90 Minuten bei 85 °C nachreagieren.

Anschließend wurde die erhaltene wässrige Polymerisatdispersion auf Raumtemperatur abgekühlt, mit 2,4 g Adipinsäuredihydrazid in 17,6 g entionisiertem Wasser versetzt und über ein 125 µm Filter filtriert.

**Zulauf 2 (homogene Mischung aus):**

| | |
|---|---|
| 4,80 g | Diacetonacrylamid |
| 31,20 g | Ethylacrylat |

Die erhaltene wässrige Polymerisatdispersion wies einen Feststoffgehalt von 40,0 Gew.-% auf. Bei der Synthese kam es zur Bildung von insgesamt mehr als 6 g Koagulat an Glaswandung, Rührer und in der Dispersion.

### Beispiel 2:

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 138,7 g | entionisiertes Wasser und |
| 324,3 g | des oben hergestellten PU-I und |
| 2,4 g | einer 1%igen wässrigen Lösung von Dissolvine E-FE6 (Akzo) |

vorgelegt und unter Rühren auf 60 °C aufgeheizt. Bei Erreichung dieser Temperatur wurden 3,0 g einer 10 gew.-%igen wässrigen Lösung von tert-Butylhydroperoxidlösung und 5,0 g Wasser zugegeben.

Anschließend wurde unter Aufrechterhaltung der Temperatur 7,9 g einer 2,87%igen wässrigen Lösung von Rongalit C (BASF) innerhalb von 140 Minuten bei gleichbleibendem Mengenstrom kontinuierlich zudosiert. Fünf Minuten nach Beginn des Rongalit C-Zulaufs wurde parallel dem Polymerisationsgemisch innerhalb von 40 Minuten bei gleichbleibendem Mengenstrom kontinuierlich Zulauf 1 zudosiert. Zehn Minuten nach dem Zulaufende von Zulauf 1 wurde innerhalb von 40 Minuten bei gleichbleibendem Mengenstrom Zulauf 2 kontinuierlich zudosiert.

Nach Beendigung des Zulaufs 2 ließ man das Polymerisationsgemisch noch 30 Minuten bei 60 °C nachreagieren.

Anschließend wurde die erhaltene wässrige Polymerisatdispersion auf Raumtemperatur abgekühlt und über ein 125 µm Filter filtriert.

**Zulauf 1:**

| | |
|---|---|
| 47,4 g | Methylmethacrylat |

**Zulauf 2 (homogene Mischung aus):**

| | |
|---|---|
| 4,8 g | Glycidylmethacrylat |
| 67,8 g | n-Butylacrylat |

Die erhaltene wässrige Polymerisatdispersion wies einen Feststoffgehalt von 40,5 Gew.-% auf, eine Teilchengröße von 151 nm (HPPS) und eine Mindestfilmbildetemperatur von 16°C. Bei dieser Art der Reaktionsführung entstand weniger als 0,1 g Koagulat in der Dispersion.

### Beispiel 3:

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 218,0 g | entionisiertes Wasser und |
| 194,6 g | des oben hergestellten PU-I und |
| 4,8 g | einer 0,5%igen wässrigen Lösung von Dissolvine E-FE6 (Akzo) |

vorgelegt und unter Rühren auf 60 °C aufgeheizt. Bei Erreichung dieser Temperatur wurden 3,0 g einer 10 gew.-%igen wässrigen Lösung von tert-Butylhydroperoxidlösung und 5,0 g Wasser zugegeben.

Anschließend wurde unter Aufrechterhaltung der Temperatur 7,9 g einer 2,87%igen wässrigen Lösung von Rongalit C (BASF) innerhalb von 140 Minuten bei gleichbleibendem Mengenstrom kontinuierlich zudosiert. Fünf Minuten nach Beginn des Rongalit C-Zulaufs wurde parallel dem Polymerisationsgemisch innerhalb von 40 Minuten bei gleichbleibendem Mengenstrom kontinuierlich Zulauf 1 zudosiert. Zehn Minuten nach dem Zulaufende von Zulauf 1 wurde innerhalb von 40 Minuten bei gleichbleibendem Mengenstrom Zulauf 2 kontinuierlich zudosiert.

Nach Beendigung des Zulaufs 2 ließ man das Polymerisationsgemisch noch 30 Minuten bei 60 °C nachreagieren.

Anschließend wurde die erhaltene wässrige Polymerisatdispersion auf Raumtemperatur abgekühlt und über ein 125 µm Filter filtriert.

**Zulauf 1 (homogene Mischung aus):**

| | |
|---|---|
| 0,72 g | Allylmethacrylat |
| 4,03 g | Butandiolmonoacrylat |
| 4,32 g | Butylacrylat |
| 5,04 g | Styrol |
| 32,29 g | Methylmethacrylat |

**Zulauf 2 (homogene Mischung aus):**

| | |
|---|---|
| 81,31 g | Butylacrylat |
| 36,29 g | Methylmethacrylat |

Die erhaltene wässrige Polymerisatdispersion wies einen Feststoffgehalt von 40,7 Gew.-% auf, eine Teilchengröße von 135 nm (HPPS) und eine Mindestfilmbildetemperatur von 4°C. Bei dieser Art der Reaktionsführung entstand weniger als 0,1 g Koagulat in der Dispersion.

### Beispiel 4:

### Polyurethan/Polyacrylat Hybriddispersion auf PU-II

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 296,9 g | entionisiertes Wasser und |
| 387,1 g | des oben beschriebenen PU-II und |
| 9,6 g | einer 0,5%igen wässrigen Lösung von Dissolvine® E-FE6 (Eisen-Kalium-Ethylendiamintetraacetatkomplex Akzo) |

vorgelegt und unter Rühren auf 70 °C aufgeheizt. Bei Erreichung dieser Temperatur wurden 9,6 g einer 10 gew.-%igen wässrigen Lösung von tert-Butylhydroperoxidlösung zugegeben.

Anschließend wurde unter Aufrechterhaltung der Temperatur eine Mischung von 0,48 g Lutavit C (Ascorbinsäure, BASF) in 21,0 g Wasser mit 0,25 g einer 25 gew.-%igen wässrigen Lösung von Ammoniak innerhalb von 180 Minuten bei gleichbleibendem Mengenstrom kontinuierlich zudosiert. Fünf Minuten nach Beginn des Zulaufs der ammonikalischen Lutavit C-Lösung wurde parallel dem Polymerisationsgemisch innerhalb von 40 Minuten bei gleichbleibendem Mengenstrom kontinuierlich Zulauf 1 zudosiert. Zehn Minuten nach dem Zulaufende von Zulauf 1 wurde innerhalb von 80 Minuten bei gleichbleibendem Mengenstrom Zulauf 2 kontinuierlich zudosiert.

Nach Beendigung des Zulaufs 2 wurden 20,6 g entionisiertes Wasser zugegeben und man ließ das Polymerisationsgemisch noch 30 Minuten bei 70 °C nachreagieren. Anschließend wurde die erhaltene wässrige Polymerisatdispersion auf Raumtemperatur abgekühlt, 4,03 g Adipinsäuredihydrazid in 29,6 g Wasser zugegeben und über ein 125 µm Filter filtriert.

**Zulauf 1 (homogene Mischung aus):**

| | |
|---|---|
| 8,06 g | Diacetonacrylamid |
| 8,06 g | Butandiolmonoacrylat |
| 10,08 g | Butylacrylat |
| 10,08 g | Styrol |
| 64,51 g | Methylmethacrylat |

**Zulauf 2 (homogene Mischung aus):**

| | |
|---|---|
| 162,60 g | Butylacrylat |
| 72,58 g | Methylmethacrylat |
| 41,13 g | entionisiertes Wasser |

Die erhaltene wässrige Polymerisatdispersion wies einen Feststoffgehalt von 42,3 Gew.-% auf, eine Teilchengröße von 91 nm (bestimmt per High Performance Particle Sizer, HPPS) und eine Mindestfilmbildetemperatur von 0°C. Bei dieser Art der Reaktionsführung entstand weniger als 0,8 g Koagulat in der Dispersion.

### Anwendungstechnische Prüfungen:

### a) Blockfestigkeitsprüfung

Zur Herstellung der Prüfkörper in Anlehnung an EN927-6, Kapitel 5, legt man 6 Holzbrettchen aus Kieferholz (150 x 50 x 5 mm) nebeneinander und beschichtet sie mittig von links nach rechts mit der zu prüfenden Lasur mit einer Naßschichtdicke von 300 µm mittels eines Erichsenaufziehgerät. Benötigt werden nur die Brettchen 2 bis 5. Nach 24 h Trocknung bei Raumtemperatur werden jeweils 2 Brettchen mit den beschichteten Seiten über Kreuz aufeinandergelegt. Anschliessend werden die Prüflinge mit speziellen 10 kg Gewichten beschwert (entspricht einer Belastung von ca. 400 g /cm²) und 24 h bei 50 °C unter diesen Konditionen gelagert. Nach dem Abkühlen werden die Prüflinge voneinander getrennt.

Die Auswertung erfolgt jeweils nach folgenden Kriterien:
Verklebung, Verblockung, Filmausrisse
0 = leichtes Entfernen der beschichteten Flächen voneinander ohne Schäden (lose anliegend)
1 = leichtes Anhaften; Trennung ohne Beschädigung des Anstriches möglich
2 = mittleres Anhaften; die Trennung des Anstrichfilmes ist möglich; leichte Haftspuren und Eindruckspuren sind vorhanden.
3 = Verblockung: Weissbruch im Anstrich, jedoch keine Filmabrisse
4 = Verblockung: Weissbruch und leichte Filmabrisse
5 = Verblockung: Völlige Verblockung, starke Filmabrisse

### b) Weißanlauftest

Die zu prüfende Lasur wird mit einer Naßschichtdicke von 300 µm mittels eines Erichsenaufziehgerät auf Glas aufgebracht. Nach 24 Stunden Trocknung bei Raumtemperatur wird die Glasplatte in einen Becher mit destilliertem Wasser eingetaucht. Hinter dem Becher wird eine schwarze Folie aufgestellt, damit der Kontrast maximiert wird. Optisch verfolgt man die Trübung der Lasur über die Zeit und die Auswertung erfolgt nach 2 Stunden Wasserkontakt mittels Noten von 0 bis 5, wobei:
0 = kein Weißanlaufen sichtbar
5 = Völlig weißangelaufene Lasur, nicht mehr durchsichtig

### c) Tieftemperaturelastizität

Die zu prüfende Lasur bzw. Farbe wird mit einer Naßschichtstärke von 1000 µm mittels eines Erichsenaufziehgeräts auf eine flache, teflonisierte Aluminiumplatte aufgebracht. Nach 7 Tagen Trocknen bei Raumtemperatur wird der freie Film von der Platte genommen und vertikal hängend für weitere 21 Tage getrocknet. Nach dieser Periode werden aus dem Film Prüfkörper nach DIN ISO 1184 ausgestanzt. Diese Prüfkörper werden für 24 Stunden bei 0 Grad Celsius gelagert und eingespannt in ein Zwick-Gerät, das in einem Klimaschrank bei 50% Luftfeuchte und 0 Grad Celsius platziert wurde, zur Überprüfung der Reißdehnung. Abziehgeschwindigkeit wird eingestellt bei 200 mm/min. Pro freiem Film wird von 5 Prüfkörpern der Mittelwert der Reißdehnung bestimmt.

Die Lasur wurde nach unterstehender Rezeptur angesetzt in einem PE-Becher mithilfe eines Dispermats. Der Feststoffgehalt der Lasur wurde konstant gehalten durch die Anpassung der Wassermenge an den Feststoffgehalt des Bindemittel.

| | | | Gewichtsteile |
|---|---|---|---|
| Wasser (vollentsalzt) | | | 100 |
| Byk® 348 | Netzmittel der Fa. BYK-Chemie GmbH | | 2 |
| Tego® Airex 901 W | Entschäumer der Fa. Evonik GmbH | | 4 |
| Solvenon® DPM | Filmbildehilfsmittel der Fa. BASF SE | | 10 |
| Butylglykol | Filmbildehilfsmittel | Lösemittel und | 15 |
| Tinuvin® 1130 | Lichtschutzmittel der Fa. BASF SE | Tinuvin wurde vorgemischt | 5 |
| Cognis DSX3290 | Verdicker der Fa.BASF SE | 34% | 11 |
| Cognis DSX3100 | Verdicker der Fa.BASF SE | 18% | 3 |
| Ammoniak | Neutralisationsmittel (25%-ig) | | 2 |
| SYLOID® W 500 | Füllstoff der Fa. W.R. Grace & Company | | 15 |
| | Dispergieren für 20 Min bei 1500 UpM | | |
| Dispersion PA-I | | 44,7% | 762 |
| Tego® Foamex 810 | Entschäumer der Fa. Evonik GmbH | | 4 |
| Wasser (vollentsalzt) | | | 71 |
| total | | | 1000 |

in diese Formulierungen wurden analog statt PA-I die in der folgenden Tabelle aufgelisteten Bestandteile eingesetzt und nach Prüfmethoden a) und b) getestet. Man erkennt klar die gleichzeitige Verbesserung der Blockfestigkeit und der Weißanlaufresistenz für die erfindungsgemäße Dipsersion Beispiel 2

| Dispersion | Blockfestigkeit | Weißanlaufresistenz |
|---|---|---|
| PA-I | 4 | 3 |
| PU-I | 5 | 3 |
| Beispiel 2 | 0,5 | 0,5 |

Dispersionen wurden auch in einer Farbformulierung mit einer PVK=18 getestet auf Blockverhalten und Tieftemperaturelastizität. Die Farbformulierung wurde wie folgt angesetzt.

| | | | Gewichtsteile |
|---|---|---|---|
| Wasser (vollentsalzt) | | | 50 |
| Byk® 348 | Netzmittel der Fa. BYK-Chemie GmbH | | 1 |
| Tego® Airex 901 W | Entschäumer der Fa. Evonik GmbH | | 2 |
| AMP90 | Neutralisationsmittel der Fa. Angus GmbH | | 2 |
| Pigmentverteiler AB30 | Dispergierhilfsmittel der Fa.BASF SE | 30% | 11 |
| TiO2 R706 | Weißpigment der Fa. DuPont | | 230 |
| | Dispergieren für 20 Min bei 1500 UpM | | |
| Dispersion PA-I | | 44.7% | 604 |
| Cognis DSX3100 | Verdicker der Fa.BASF SE | 18% | 8 |
| Texanol | Filmbildehilfsmittel der Fa. Eastman | | 10 |
| Butyldiglykol | Filmbildehilfsmittel der Fa. BASF SE | | 10 |
| Foamstar® A38 | Entschäumer der Fa. BASF SE | | 3 |
| Wasser (vollentsalzt) | | | 69 |
| total | | | 1000 |

Folgenden Dispersionen wurden in diese Formulierung eingesetzt: PA-I, PU-II, Beispiel 2 und Beispiel 4. Sie wurden getestet nach Prüfmethode a) und c). Man erkennt klar die gleichzeitige Verbesserung der Blockfestigkeit und der Tieftemperaturelastizität für die erfindungsgemäßen Beispiele, wobei Beispiel 4 das beste Kompromis liefert.

| Dispersion | Blockfestigkeit | Tieftemperaturelastizität |
|---|---|---|
| PA-I | 2 | 10% |
| PU-II | 5 | 370% |
| Beispiel 2 | 0,5 | 30% |
| Beispiel 4 | 0,5 | 210% |

## Patentansprüche

1. Polyurethan-Polyacrylat-Hybrid Dispersionen, erhältlich durch zweistufige radikalische Polymerisierung ethylenisch ungesättigter Verbindungen in Gegenwart mindestens eines Polyurethans (P1), wobei man
- in einer ersten Stufe ein Monomerengemisch (e) mindestens einer ethylenisch ungesättigten Verbindung
- in Gegenwart des mindestens einen Polyurethans (P1),
- mindestens eines Redoxinitiatorsystems (I) und
- mindestens einer Eisenverbindung (F) zumindest teilweise radikalisch polymerisiert und anschließend
- in einer zweiten Stufe ein Monomerengemisch (f) mindestens einer ethylenisch ungesättigten Verbindung
- radikalisch polymerisiert,
wobei
- das mindestens eine Polyurethan (P1)
- ausschließlich aus aliphatischen und/oder cycloaliphatischen Isocyanaten als isocyanatgruppenhaltigen Aufbaukomponenten aufgebaut ist und
- einen Gehalt an zumindest teilweise neutralisierten Säuregruppen unter 500 mmol pro kg Polyurethan aufweist,
- das polymerisierte Monomerengemisch (e) der ersten Stufe eine Glasübergangstemperatur von mindestens 50 °C aufweist,
- das polymerisierte Monomerengemisch (f) der zweiten Stufe eine Glasübergangstemperatur von bis zu 20 °C aufweist,
- das Gewichtsverhältnis von Polyurethan (P1) zu der Summe der ethylenisch ungesättigten Verbindungen (e) und (f) der ersten und zweiten Stufen von 50 : 50 bis 30 : 70 beträgt,
- die Temperatur während der radikalischen Polymerisierung nicht mehr als 85 °C beträgt, und wobei die Glasübergangstemperatur gemäß ASTM-Vorschrift D3418-03 durch Differential Scanning Calorimetry (DSC) mit einer Aufheizrate von 10°C/min bestimmt wird.

2. Polyurethan-Polyacrylat-Hybrid Dispersionen gemäß Anspruch 1, **dadurch gekennzeichnet, daß** das Polyurethan P1) erhältlich ist durch
I) Herstellung eines Polyurethans durch Umsetzung von
a) mindestens einem mehrwertigen Isocyanat mit 4 bis 30 C-Atomen,
b) Diolen, von denen
b1) 10 bis 100 mol-%, bezogen auf die Gesamtmenge der Diole (b), ein Molekulargewicht von 500 bis 5000 aufweisen, und
b2) 0 bis 90 mol-%, bezogen auf die Gesamtmenge der Diole (b), ein Molekulargewicht von 60 bis 500 g/mol aufweisen,
c) gegebenenfalls weiteren von den Diolen (b) verschiedenen mehrwertigen Verbindungen mit reaktiven Gruppen, bei denen es sich um alkoholische Hydroxylgruppen oder primäre oder sekundäre Aminogruppen handelt und
d) von den Monomeren (a), (b) und (c) verschiedene Monomere mit wenigstens einer Isocyanatgruppe oder wenigstens einer gegenüber Isocyanatgruppen reaktiven Gruppe, die darüber hinaus wenigstens eine hydrophile Gruppen oder eine potentiell hydrophile Gruppe tragen, wodurch die Wasserdispergierbarkeit der Polyurethane bewirkt wird,
zu einem Polyurethan in Gegenwart eines Lösungsmittels und
II) anschließender Dispergierung des Polyurethans in Wasser,
III) wobei man vor, während und/oder nach Schritt II gegebenenfalls Polyamine zusetzen kann.

3. Polyurethan-Polyacrylat-Hybrid Dispersionen gemäß Anspruch 2, **dadurch gekennzeichnet, daß** a) ausgewählt aus der Gruppe bestehend aus 1,6-Hexamethylendiisocyanat und Isophorondiisocyanat.

4. Polyurethan-Polyacrylat-Hybrid Dispersionen gemäß Anspruch 2 oder 3, **dadurch gekennzeichnet, daß** es sich bei dem Diol b1) zumindest teilweise um einen Polyester handelt, der als Aufbaukomponente zumindest teilweise eine 1,2- oder 1,3-disubstituierte cyclische Dicarbonsäure in eingebauter Form enthält.

5. Polyurethan-Polyacrylat-Hybrid Dispersionen gemäß einem der vorstehenden Ansprüche, **dadurch gekennzeichnet, daß** das Monomerengemisch (e) zusammengesetzt ist wie folgt:
e1) mindestens 60, bevorzugt mindestens 70 und besonders bevorzugt mindestens 80 Gew% und bis zu 100, bevorzugt bis zu 95 und besonders bevorzugt bis zu 90 Gew% mindestens eines (Cyclo)Alkyl(meth)-acrylats,
e2) 0 Gew%, bevorzugt mindestens 5 und besonders bevorzugt mindestens 10 Gew% und bis zu 40, bevorzugt bis zu 30 und besonders bevorzugt bis zu 20 Gew% mindestens eines (Meth)acrylats oder (Meth)acrylamids, das mindestens eine funktionelle Gruppe trägt,
e3) 0 bis 15 Gew%, bevorzugt 0 bis 10 und besonders bevorzugt 0 bis 5 Gew% radikalisch polymerisierbaren Monomeren mit genau einer radikalisch polymerisierbaren Doppelbindungen, die mindestens ein aromatisches Ringsystem enthalten,
e4) optional α,β-ungesättigte Carbonsäuren in Mengen, so daß der oben genannte Gehalt an Säuregruppen nicht überschritten wird, bevorzugt 0 Gew% und
e5) 0 bis 3 Gew%, bevorzugt 0 bis 1, besonders bevorzugt mindestens 0 bis 0,5 Gew% mindestens einer Verbindung, die mindestens zwei radikalisch polymerisierbare Doppelbindungen aufweist,
mit der Maßgabe, daß die Summe immer 100 Gew% beträgt und die für diese Monomerenmischung in Anspruch 1 angegeben genannte Glasübergangstemperatur und der genannte Gehalt an Säuregruppen eingehalten wird.

6. Polyurethan-Polyacrylat-Hybrid Dispersionen gemäß einem der vorstehenden Ansprüche, **dadurch gekennzeichnet, daß** das Monomerengemisch (f) zusammengesetzt ist wie folgt:
f1) mindestens 60, bevorzugt mindestens 70 und besonders bevorzugt mindestens 80 Gew% und bis zu 100, bevorzugt bis zu 95 und besonders bevorzugt bis zu 90 Gew% mindestens eines (Cyclo)Alkyl(meth)-acrylats,
f2) 0 Gew%, bevorzugt mindestens 5 und besonders bevorzugt mindestens 10 Gew% und bis zu 40, bevorzugt bis zu 30 und besonders bevorzugt bis zu 20 Gew% mindestens eines (Meth)acrylats oder (Meth)acrylamids, das mindestens eine funktionelle Gruppe trägt,
f3) 0 bis 5 Gew%, bevorzugt 0 bis 3 und besonders bevorzugt 0 Gew% radikalisch polymerisierbaren Monomeren, die mindestens ein aromatisches Ringsystem mit genau einer radikalisch polymerisierbaren Doppelbindungen enthalten,
f4) optional α,β-ungesättigte Carbonsäuren in Mengen, so daß der oben genannte Gehalt an Säuregruppen nicht überschritten wird und
f5) 0 bis 3 Gew%, bevorzugt 0 bis 1, besonders bevorzugt mindestens 0 bis 0,5 Gew% mindestens einer Verbindung, die mindestens zwei radikalisch polymerisierbare Doppelbindungen aufweist,
mit der Maßgabe, daß die Summe immer 100 Gew% beträgt und die für diese Monomerenmischung in Anspruch 1 genannte Glasübergangstemperatur und der genannte Gehalt an Säuregruppen eingehalten wird.

7. Polyurethan-Polyacrylat-Hybrid Dispersionen gemäß Anspruch 5, **dadurch gekennzeichnet, daß** es sich bei dem Monomer (e1) zumindest teilweise um Methylmethacrylat handelt.

8. Polyurethan-Polyacrylat-Hybrid Dispersionen gemäß Anspruch 6, **dadurch gekennzeichnet, daß** es sich bei dem Monomer (f2) zumindest teilweise um n-Butylacrylat und/oder 2-Ethylhexylacrylat handelt.

9. Polyurethan-Polyacrylat-Hybrid Dispersionen gemäß einem der vorstehenden Ansprüche, **dadurch gekennzeichnet, daß** die Monomere (e2) ausgewählt sind aus der Gruppe bestehend aus Acrylsäure-2-hydroxyethylester, Acrylsäure-4-hydroxybutylester, Methacrylsäure-2-hydroxyethylester, Ureido ethyl methacrylat und Diacetonacrylamid.

10. Polyurethan-Polyacrylat-Hybrid Dispersionen gemäß einem der vorstehenden Ansprüche, **dadurch gekennzeichnet, daß** es sich bei dem Monomer (f2) um Glycidylmethacrylat, Ureido ethyl methacrylat oder Diacetonacrylamid handelt.

11. Verwendung von Polyurethan-Polyacrylat-Hybrid Dispersionen gemäß einem der vorstehenden Ansprüche zum Beschichten und Imprägnieren von Substraten.

12. Verwendung nach Anspruch 11, **dadurch gekennzeichnet, daß** das Substrat ausgewählt ist aus der Gruppe bestehend aus Holz, Holzfurnier, Papier, Pappe, Karton, Textil, Leder, Vlies, Kunststoffoberflächen, Glas, Keramik, mineralischen Baustoffen, Metallen und beschichteten Metallen.

13. Verwendung nach Anspruch 11, **dadurch gekennzeichnet, daß** es sich bei dem Substrat um Holz in Außen- oder Innenanwendungen handelt.

14. Verfahren zur Herstellung von Polyurethan-Polyacrylat-Hybrid Dispersionen gemäß einem der Ansprüche 1 bis 10, **dadurch gekennzeichnet, daß** man man das Polyurethan (P1) sowie zumindest einen Teil des Initiators (I1) vorlegt und die Polymerisation durch Zugabe des Initiators (12) und des Monomeren (e) startet und nach vollständiger oder teilweiser Abreaktion der Monomere (e) dann das Monomerengemisch (f) zuführt und die Polymerisierung bis zum im wesentlichen vollständigen Umsatz führt.

## Claims

1. A polyurethane-polyacrylate hybrid dispersion obtainable by two-stage free-radical polymerization of ethylenically unsaturated compounds in the presence of at least one polyurethane (P1), where
- in a first stage a monomer mixture (e) of at least one ethylenically unsaturated compound is subjected to at least partial free-radical polymerization
- in the presence of the at least one polyurethane (P1),
- at least one redox initiator system (I), and
- at least one iron compound (F)
and subsequently
- in a second stage a monomer mixture (f) of at least one ethylenically unsaturated compound is subjected to free-radical polymerization, where
- the at least one polyurethane (P1)
- - is composed exclusively of aliphatic and/or cycloaliphatic isocyanates as isocyanate-group-containing synthesis components and
- - has an at least partially neutralized acid group content of less than 500 mmol per kg of polyurethane,
- the polymerized monomer mixture (e) of the first stage has a glass transition temperature of at least 50°C,
- the polymerized monomer mixture (f) of the second stage has a glass transition temperature of up to 20°C,
- the weight ratio of polyurethane (P1) to the sum of the ethylenically unsaturated compounds (e) and (f) of the first and second stages is from 50:50 to 30:70,
- the temperature during the free-radical polymerization is not more than 85°C, and where the glass transition temperature is determined in accordance with ASTM provision D3418-03, via Differential Scanning Calorimetry (DSC), with a heating rate of 10°C/min.

2. The polyurethane-polyacrylate hybrid dispersion according to claim 1, wherein the polyurethane (P1) is obtainable by
I) preparing a polyurethane by reacting
a) at least one polyfunctional isocyanate having 4 to 30 C atoms,
b) diols of which
b1) 10 to 100 mol%, based on the total amount of the diols (b), have a molecular weight of 500 to 5000, and
b2) 0 to 90 mol%, based on the total amount of the diols (b), have a molecular weight of 60 to 500 g/mol,
c) optionally further polyfunctional compounds, different from the diols (b), having reactive groups which are alcoholic hydroxyl groups or primary or secondary amino groups, and
d) monomers different from the monomers (a), (b) and (c) and having at least one isocyanate group or at least one group which is reactive toward isocyanate groups, and which additionally carry at least one hydrophilic group or potentially hydrophilic group which renders the polyurethane dispersible in water, to give a polyurethane in the presence of a solvent, and
II) subsequently dispersing the polyurethane in water,
III) where, before, during and/or after step II, it is possible optionally to add polyamines.

3. The polyurethane-polyacrylate hybrid dispersion according to claim 2, wherein a) selected from the group consisting of 1,6-hexamethylene diisocyanate and isophorone diisocyanate.

4. The polyurethane-polyacrylate hybrid dispersion according to claim 2 or 3, wherein the diol b1) is at least in part a polyester which comprises as synthesis component at least in part a 1,2- or 1,3-disubstituted cyclic dicarboxylic acid in incorporated form.

5. The polyurethane-polyacrylate hybrid dispersion according to any of the preceding claims, wherein the monomer mixture (e) is composed as follows:
e1) at least 60%, preferably at least 70%, and more preferably at least 80% by weight and up to 100%, preferably up to 95%, and more preferably up to 90% by weight of at least one (cyclo)alkyl (meth)acrylate,
e2) 0% by weight, preferably at least 5%, and more preferably at least 10% by weight and up to 40%, preferably up to 30%, and more preferably up to 20% by weight of at least one (meth)acrylate or (meth)acrylamide which carries at least one functional group,
e3) 0% to 15%, preferably 0% to 10%, and more preferably 0% to 5% by weight of free-radically polymerizable monomers having precisely one free-radically polymerizable double bond and comprising at least one aromatic ring system,
e4) optionally α,β-unsaturated carboxylic acids, in amounts such that the above-stated acid group content is not exceeded, preferably 0% by weight, and
e5) 0% to 3%, preferably 0% to 1%, more preferably at least 0% to 0.5% by weight of at least one compound which has at least two free-radically polymerizable double bonds,
with the proviso that the sum is always 100% by weight and that the glass transition temperature stated for this monomer mixture, indicated in claim 1, and the acid group content stated are observed.

6. The polyurethane-polyacrylate hybrid dispersion according to any of the preceding claims, wherein the monomer mixture (f) is composed as follows:
f1) at least 60%, preferably at least 70%, and more preferably at least 80% by weight and up to 100%, preferably up to 95%, and more preferably up to 90% by weight of at least one (cyclo)alkyl (meth)acrylate,
f2) 0% by weight, preferably at least 5%, and more preferably at least 10% by weight and up to 40%, preferably up to 30%, and more preferably up to 20% by weight of at least one (meth)acrylate or (meth)acrylamide which carries at least one functional group,
f3) 0% to 5%, preferably 0% to 3%, and more preferably 0% by weight of free-radically polymerizable monomers which comprise at least one aromatic ring system with precisely one free-radically polymerizable double bond,
f4) optionally α,β-unsaturated carboxylic acids, in amounts such that the above-stated acid group content is not exceeded, and
f5) 0% to 3%, preferably 0% to 1%, more preferably at least 0% to 0.5% by weight of at least one compound which has at least two free-radically polymerizable double bonds,
with the proviso that the sum is always 100% by weight and that the glass transition temperature stated for this monomer mixture, indicated in claim 1, and the acid group content stated are observed.

7. The polyurethane-polyacrylate hybrid dispersion according to claim 5, wherein the monomer (e1) is at least in part methyl methacrylate.

8. The polyurethane-polyacrylate hybrid dispersion according to claim 6, wherein the monomer (f2) is at least in part n-butyl acrylate and/or 2-ethylhexyl acrylate.

9. The polyurethane-polyacrylate hybrid dispersion according to any of the preceding claims, wherein the monomers (e2) are selected from the group consisting of 2-hydroxyethyl acrylate, 4-hydroxybutyl acrylate, 2-hydroxyethyl methacrylate, ureidoethyl methacrylate, and diacetoneacrylamide.

10. The polyurethane-polyacrylate hybrid dispersion according to any of the preceding claims, wherein the monomer (f2) is glycidyl methacrylate, ureidoethyl methacrylate or diacetoneacrylamide.

11. The use of a polyurethane-polyacrylate hybrid dispersion according to any of the preceding claims for coating and impregnating a substrate.

12. The use according to claim 11, wherein the substrate is selected from the group consisting of wood, wood veneer, paper, paperboard, cardboard, textile, leather, nonwoven, plastics surfaces, glass, ceramic, mineral building materials, and metals, including coated metals.

13. The use according to claim 11, wherein the substrate is wood in exterior or interior applications.

14. A process for preparing a polyurethane-polyacrylate hybrid dispersion according to any of claims 1 to 10, which comprises initially introducing the polyurethane (P1) and also at least part of the initiator (I1) and starting the polymerization by adding the initiator (12) and the monomers (e), and then, following complete or partial consumption of the monomers (e) by reaction, supplying the monomer mixture (f) and continuing the polymerization to a point of substantially complete conversion.

## Revendications

1. Dispersions hybrides de polyuréthane-polyacrylate, pouvant être obtenues par polymérisation radicalaire à deux étapes de composés éthyléniquement insaturés en présence d'au moins un polyuréthane (P1), selon laquelle
- lors d'une première étape, un mélange de monomères (e) d'au moins un composé éthyléniquement insaturé est polymérisé par voie radicalaire au moins partiellement
- en présence dudit au moins un polyuréthane (P1),
- d'au moins un système d'initiateur redox (I) et
- d'au moins un composé de fer (F), puis
- lors d'une seconde étape, un mélange de monomères (f) d'au moins un composé éthyléniquement insaturé
- est polymérisé par voie radicalaire,
- ledit au moins un polyuréthane (P1)
- étant exclusivement constitué par des isocyanates aliphatiques et/ou cycloaliphatiques en tant que composants constitutifs contenant des groupes isocyanate, et
- présentant une teneur en groupes acides au moins partiellement neutralisés inférieure à 500 mmol par kg de polyuréthane,
- le mélange de monomères (e) polymérisé de la première étape présentant une température de transition vitreuse d'au moins 50 °C,
- le mélange de monomères (f) polymérisé de la seconde étape présentant une température de transition vitreuse de jusqu'à 20 °C,
- le rapport en poids entre le polyuréthane (P1) et la somme des composés éthyléniquement insaturés (e) et (f) de la première et de la seconde étape étant de 50:50 à 30:70,
- la température pendant la polymérisation radicalaire n'étant pas supérieure à 85 °C, et la température de transition vitreuse étant déterminée selon la procédure ASTM D3418-03 par analyse calorimétrique différentielle (DSC) avec un taux de chauffage de 10 °C/min.

2. Dispersions hybrides de polyuréthane-polyacrylate selon la revendication 1, **caractérisées en ce que** le polyuréthane P1) peut être obtenu par
I) la fabrication d'un polyuréthane par mise en réaction de
a) au moins un isocyanate polyvalent de 4 à 30 atomes C,
b) des diols, parmi lesquels
b1) 10 à 100 % en moles, par rapport à la quantité totale de diols (b), présentent un poids moléculaire de 500 à 5 000, et
b2) 0 à 90 % en moles, par rapport à la quantité totale des diols (b), présentent un poids moléculaire de 60 à 500 g/mol,
c) éventuellement d'autres composés polyvalents différents des diols (b) contenant des groupes réactifs, ceux-ci étant des groupes hydroxyle alcooliques ou des groupes amino primaires ou secondaires, et
d) des monomères différents des monomères (a), (b) et (c) contenant au moins un groupe isocyanate ou au moins un groupe réactif avec les groupes isocyanate, qui portent par ailleurs au moins un groupe hydrophile ou un groupe hydrophile potentiel, qui provoquent la dispersibilité dans l'eau des polyuréthanes,
pour former un polyuréthane en présence d'un solvant, puis
II) la dispersion du polyuréthane dans de l'eau,
III) des polyamines pouvant éventuellement être ajoutées avant, pendant et/ou après l'étape II.

3. Dispersions hybrides de polyuréthane-polyacrylate selon la revendication 2, **caractérisées en ce que** a) choisi dans le groupe constitué par le diisocyanate de 1,6-hexaméthylène et le diisocyanate d'isophorone.

4. Dispersions hybrides de polyuréthane-polyacrylate selon la revendication 2 ou 3, **caractérisées en ce que** le diol b1) est au moins en partie un polyester, qui contient en tant que composant constitutif au moins en partie un acide dicarboxylique cyclique 1,2- ou 1,3-disubstitué sous forme incorporée.

5. Dispersions hybrides de polyuréthane-polyacrylate selon l'une quelconque des revendications précédentes, **caractérisées en ce que** le mélange de monomères (e) a la composition suivante :
e1) au moins 60, de préférence au moins 70 et de manière particulièrement préférée au moins 80 % en poids et jusqu'à 100, de préférence jusqu'à 95 et de manière particulièrement préférée jusqu'à 90 % en poids d'au moins un (méth)acrylate de (cyclo)alkyle, e2) 0 % en poids, de préférence au moins 5 et de manière particulièrement préférée au moins 10 % en poids et jusqu'à 40, de préférence jusqu'à 30 et de manière particulièrement préférée jusqu'à 20 % en poids d'au moins un (méth)acrylate ou (méth)acrylamide, qui porte au moins un groupe fonctionnel,
e3) 0 à 15 % en poids, de préférence 0 à 10 et de manière particulièrement préférée 0 à 5 % en poids de monomères polymérisables par voie radicalaire contenant exactement une double liaison polymérisable par voie radicalaire, qui contiennent au moins un système cyclique aromatique,
e4) éventuellement des acides carboxyliques α,β-insaturés, de sorte que la teneur indiquée précédemment en groupes acides ne soit pas dépassée, de préférence 0 % en poids, et
e5) 0 à 3 % en poids, de préférence 0 à 1, de manière particulièrement préférée au moins 0 à 0,5 % en poids d'au moins un composé qui comprend au moins deux doubles liaisons polymérisables par voie radicalaire,
à condition que la somme soit toujours de 100 % en poids, et que la température de transition vitreuse indiquée dans la revendication 1 pour ce mélange de monomères et la teneur indiquée en groupes acides soient respectées.

6. Dispersions hybrides de polyuréthane-polyacrylate selon l'une quelconque des revendications précédentes, **caractérisées en ce que** le mélange de monomères (f) a la composition suivante :
f1) au moins 60, de préférence au moins 70 et de manière particulièrement préférée au moins 80 % en poids et jusqu'à 100, de préférence jusqu'à 95 et de manière particulièrement préférée jusqu'à 90 % en poids d'au moins un (méth)acrylate de (cyclo)alkyle, f2) 0 % en poids, de préférence au moins 5 et de manière particulièrement préférée au moins 10 % en poids et jusqu'à 40, de préférence jusqu'à 30 et de manière particulièrement préférée jusqu'à 20 % en poids d'au moins un (méth)acrylate ou (méth)acrylamide, qui porte au moins un groupe fonctionnel,
f3) 0 à 5 % en poids, de préférence 0 à 3 et de manière particulièrement préférée 0 % en poids de monomères polymérisables par voie radicalaire contenant au moins un système cyclique aromatique avec exactement une double liaison polymérisable par voie radicalaire,
f4) éventuellement des acides carboxyliques α,β-insaturés, de sorte que la teneur indiquée précédemment en groupes acides ne soit pas dépassée, et
f5) 0 à 3 % en poids, de préférence 0 à 1, de manière particulièrement préférée au moins 0 à 0,5 % en poids d'au moins un composé qui comprend au moins deux doubles liaisons polymérisables par voie radicalaire,
à condition que la somme soit toujours de 100 % en poids, et que la température de transition vitreuse indiquée dans la revendication 1 pour ce mélange de monomères et la teneur indiquée en groupes acides soient respectées.

7. Dispersions hybrides de polyuréthane-polyacrylate selon la revendication 5, **caractérisées en ce que** le monomère (e1) est au moins en partie le méthacrylate de méthyle.

8. Dispersions hybrides de polyuréthane-polyacrylate selon la revendication 6, **caractérisées en ce que** le monomère (f2) est au moins en partie l'acrylate de n-butyle et/ou l'acrylate de 2-éthylhexyle.

9. Dispersions hybrides de polyuréthane-polyacrylate selon l'une quelconque des revendications précédentes, **caractérisées en ce que** les monomères (e2) sont choisis dans le groupe constitué par l'ester 2-hydroxyéthylique de l'acide acrylique, l'ester 4-hydroxybutylique de l'acide acrylique, l'ester 2-hydroxyéthylique de l'acide méthacrylique, le méthacrylate d'uréido-éthyle et le diacétonacrylamide.

10. Dispersions hybrides de polyuréthane-polyacrylate selon l'une quelconque des revendications précédentes, **caractérisées en ce que** le monomère (f2) est le méthacrylate de glycidyle, le méthacrylate d'uréido-éthyle ou le diacétonacrylamide.

11. Utilisation de dispersions hybrides de polyuréthane-polyacrylate selon l'une quelconque des revendications précédentes pour le revêtement et l'imprégnation de substrats.

12. Utilisation selon la revendication 11, **caractérisée en ce que** le substrat est choisi dans le groupe constitué par le bois, le placage de bois, le papier, le carton, le textile, le cuir, le non-tissé, les surfaces en plastique, le verre, la céramique, les matériaux de construction minéraux, les métaux et les métaux revêtus.

13. Utilisation selon la revendication 11, **caractérisée en ce que** le substrat est le bois dans des applications extérieures ou intérieures.

14. Procédé de fabrication de dispersions hybrides de polyuréthane-polyacrylate selon l'une quelconque des revendications 1 à 10, **caractérisé en ce que** le polyuréthane (P1) et au moins une partie de l'initiateur (I1) sont chargés initialement, et la polymérisation est démarrée par ajout de l'initiateur (I2) et des monomères (e), puis le mélange de monomères (f) est introduit après réaction totale ou partielle des monomères (e), et la polymérisation est réalisée jusqu'à la conversion essentiellement totale.
